# EUROPEAN PATENT APPLICATION

(11) **EP 1 793 218 A1**
(43) Date of publication of application: **06.06.2007**
(21) Application number: 06000799.4
(22) Date of filing: 16.01.2006
(51) Int. Cl.: G01N 1/31, G01N 1/30

(54) **Removal of embedding medium**

(30) Priority: 30.11.2005 US 740789 P
(71) Applicant: Dako Denmark A/S, 2600 Glostrup (DK)
(72) Inventor: Winther, Lars, 2765 Smørum (DK); Lindberg, Martin N., 2760 Måløv (DK)
(74) Representative: Danfelter, Maria

(57) **Abstract**

A method, apparatus and system for automated removal of an embedding medium from an embedded biological sample. The method comprising the steps of: providing an automated sample processing system having an automated process operation capability that causes automated process operation events through robotic sample process functions; providing a clearing solvent, e.g. an organic solvent, capable of lowering the melting point of an embedding medium and/or dissolving an embedding medium; loading a plurality of carriers with embedded biological samples in the automated sample processing system; exposing an embedded biological sample to the clearing solvent, whereby the embedding medium is liquefied; and providing a washing solution capable of removing the clearing solvent and the liquefied embedded medium from said biological sample, said clearing solvent and said washing solution being immiscible.

## Description

### Technical field of the invention

The present invention relates to the field of processing of biological samples, and specifically to pre-treatment of embedded biological samples, e.g. removal of embedding medium from embedded biological samples. More specifically the invention relates to removal of embedding medium from embedded biological samples without using alcohol or a clearing solvent that is toxic or flammable.

### Background of the invention

Sample processing in immunohistochemical ("IHC") applications, for example, and in other chemical and biological analyses may involve one or a number of various processing sequences or treatment protocols as part of an analysis of one or more samples. Typically, such treatment protocols are defined by organizations or individuals requesting analysis, such as pathologists or histologists attached to a hospital, and may be further defined by the dictates of a particular analysis to be performed.

In preparation for sample analysis, a biological sample may be acquired and presented on a slide or other carrier usually in some form of preservation. As one example, a sample such as a layer or slice of skin may be preserved in formaldehyde and presented on a slide with one or more paraffin or other chemical layers overlaying the sample. Samples preserved with paraffin may undergo deparaffinization, a process by which paraffin layers overlaying the sample are removed. In addition, the target or sample may be restored to a condition where it is suitable for staining operations - a process known as target retrieval.

The term "staining" is used to refer to the process by which certain parts of a sample are treated in order to reveal or highlight characteristics of the sample. As a result of staining, characteristics sought to be revealed may acquire a different color, either in the optic range or in another electromagnetic range, such as the ultra-violet range. In some instances, staining may lead to a detectable change in properties, such as a change in the fluorescent, magnetic, electrical, or radioactive properties of the sample. To obtain a staining a sample may undergo a series of treatment steps referred to as a treatment protocol. A typical treatment protocol may include any or all of washing; binding of reagents to the specific parts of the sample; any activation of the reagents; and each treatment step may include a plurality of individual treatments.

Immunologic applications, for example, may involve processing sequences or treatment protocols that comprise steps such as deparaffinization, target retrieval, and staining, especially for in-situ hybridization ("ISH") techniques. In some applications, these steps may have been performed manually, potentially creating a time-intensive protocol and necessitating personnel to be actively involved in the sample processing. Even when performed automatically, there have been insufficiencies in such systems. Attempts have been made to automate sample processing to address the need for expedient sample processing and a less manually burdensome operation.

In order to preserve biological samples for future analysis, different kinds of embedding media have been used. By "embedding medium" is meant any composition that is solid at room temperature and is used in the histochemical art for embedding or otherwise supporting biological samples for histological or other analyses, such as in situ hybridization, special stains, and classical dye stains. Examples of embedding medium include, but are not limited to, wax, paraffin, paramat, paraplats, peel away paraffin, tissue freezing medium, cryonic gel, OCT^{™} ("Optimum Cutting Temperature") embedding compound, Polyfin^{™}, polyester wax.

By "wax" is meant a composition for embedding biological samples for histochemical or other chemical and biological analyses. Wax is solid at room temperature, usually consists of a complex mixture of higher hydrocarbons often including esters of higher fatty acids and higher glycols, may be mineral, natural or synthetic in origin, is harder and more brittle than fats, is soluble in oils and fats, and can optionally contain additatives that enhance its sample-embedding properties. Paraffin is an example of a mineral wax most commonly used in the histochemical field. Paraffin is typically prepared by distillation of petroleum, and is a mixture of primarily solid saturated hydrocarbons. The paraffin (wax) is basically higher polyolefins - often with polymers or DMSO added.

Paraffin, which is a hydrophobic substance, has, for example, been used for many years as an embedding medium in the preparation of biological samples for sectioning in a microtome to produce sample sections for histological studies.

By "histochemical" is meant to include the techniques and methods known as immunohistochemical, cytochemical, histopathologic, enzyme histochemical, special stains, microtechniques, in situ hybridization, and the use of molecular probes.

Deparaffinization prior to staining is usually required to avoid the paraffin to interfere with e.g. the antibody or probe binding used in the subsequent staining process. Examples of clearing solvents for deparaffinization are xylene, xylene substitutes and toluene which may be toxic, flammable and pose environmental hazards.

Traditional manual deparaffinization procedures include, for example, the steps of immersing the embedded sample in a xylene (Fisher Scientific, Cat. #X5-4) bath, toluene bath or a Histo-Clear^{®} (National Diagnostics Inc., Cat. # HS-200) bath until the embedding medium is solubilized. The deparaffinized sample is then washed and dehydrated with a series of alcohol solutions of decreasing alcohol concentration, typically as baths in which the sample is immersed, to remove the embedding medium, e.g. xylene. The sample may for example be washed by immersing it in a first bath of 99% ethanol, a second bath of 95% ethanol and a third bath with an aqueous buffer. Finally, the sample is usually washed with water.

As mentioned above, xylene is a flammable, volatile and toxic organic solvent. Xylene has further a low boiling point of about 137 degrees C, a low flash point of about 29 degrees C, and a low explosive limit between 1 - 6 %.

The flash point of a fuel is the lowest temperature at which it can form an ignitable mix with air. At this temperature the vapor may cease to bum when the source of ignition is removed. A slightly higher temperature, the fire point, is defined as the temperature when vapor continues to bum after being ignited.

As xylene, also alcohol, and especially ethanol is flammable and has a low boiling point of about 78 degrees C, a low flash point of about 17 degrees C, low explosive limits between 3.5 - 15% and can therefore easily form part in an explosive air mixture.

Due to the hazardous properties of xylene and alcohol, safer deparaffinization of embedded samples would be advantageous. Efforts have been made to replace xylene in the deparaffinization process with less toxic and less volatile solvents. Terpene oil and isoparaffinic hydrocarbons, for example, have been shown to produce deparaffinization equal to xylene. However, a series of alcohol washes are still required to remove the solvent prior to the water wash to achieve compatibility with most types of staining, particularly immunohistochemical staining.

The US patent 6,632,598 B1, the US application 2003/0175852 A1, and the international application WO 02/23156 A1 to BioGenex Laboratories describe compositions and methods for removal of wax from wax-embedded biological samples wherein the use of xylene may be eliminated and the use of alcohol in the subsequent washing steps is reduced or eliminated. The compositions described comprise a paraffin-solubilizing organic solvent, a polar organic solvent and a surfactant. Examples of paraffin-solubilizing organic solvents include aromatic hydrocarbons, aliphatic hydrocarbons, terpenes, other oils, and petroleum distillates. The polar organic solvent includes preferably ketones and lower alcohols. Preferred alcohols are ethanol, ethylene glycol, isopropanol, propylene glycol and mixtures thereof.

A drawback with the compositions and methods disclosed by BioGenex Laboratories, is that even if the use of post-deparaffinization alcohol baths may be reduced or eliminated, the polar organic solvent of the deparaffinization compositions disclosed includes alcohol and therefore, the deparaffinization compositions disclosed have the same drawbacks as the deparaffinization methods using alcohol washes, i.e. that the composition may be flammable, has a low boiling point, a low flash point and low explosive limits due to the alcohol content.
The US patent 5,344,637 to Camiener describes a method of using organic ring-containing compounds as clearing solvents instead of Histo-Clear^{®} and Xylene. The clearing solvents are used to replace the alcohol and/or other dehydrants in fixed biological materials and to remove wax from wax-embedded biological materials. The clearing solvent comprises from 5% to 100%, by weight, of a compound selected from the group consisting of unsubstituted and substituted derivatives of saturated, organic ring-containing compounds, either alone, or present in hydrogenated aromatic petroleum distillates, and in combination thereof. The clearing solvent is sold by CBG Biotech under the trade mark Formula 83^{™}. A drawback with Formula 83^{™} is its fairly low boiling point at 119 degrees to 145 degrees C and general flammability. An unpractical and harzardeous property is indicated by the low flash point of only 7 degrees Celsius, and a lower explosive limit (LEL) at only 1.3 vol%, i.e. at a temperature above 7 degrees Celsius Formula 83^{™} may form an ignitable mix with air.

Another drawback, according to material safety data sheets, Formula 83 is a blend of organic solvents and consequently personal safety precautions like gloves and safety goggles should be used.

The US patent application US 2004/0002163 and the international application WO 03/089240 A1 to Ventana Medical Systems, Inc. describe an automated slide staining system for applications of stains to biological tissue sections mounted on microscopic slides. The tissue samples are deparaffinized by contacting the sample with a deparaffinizing fluid at a temperature above the melting point of the paraffin embedding the tissue sample. The liquefied paraffin is then rinsed away. The deparaffinizing fluid is an aqueous-based fluid and typically heated to a temperature between 60 - 70 degrees C., when the embedding medium is paraffin having a melting point between 50 - 57 degrees C.

The patents US 6,855,559 B1 and US 6,544,798 B1, and the international applications WO 99/44030 and WO 00/14507 to Ventana Medical Systems, Inc. disclose removal of embedding medium, without the use of organic solvents, by heating one side of the sample such that the sample slide is dried and the embedding medium is solubilized. The solubilized embedding medium is thereafter washed off. The embedding medium is removed from biological samples on automated instruments prior to immunohistochemical ("IHC"), in situ hybridization ("ISH") or other histochemical or cytochemical manipulations.

According to the disclosure of WO 99/44030, the deparaffinization of the embedded tissue is achieved by precisely controlled heating of individual slides allowing the paraffin embedded in the tissue to melt out and float in aqueous solution where it can be rinsed away. The heating is accomplished by means of thermal platforms arranged radially about the perimeter of a slide carousel upon which the slides with tissue samples may be placed.

Removal of the embedding medium using heat is also disclosed in the international application WO 2005/057180 to Torstein Ljungmann et al.

A drawback with methods and systems using heating is that it may be a slow process, since a paraffin embedded biological sample has to be subjected to elevated temperatures ranging from 5 minutes to 60 minutes.

Another drawback is the presumed low efficiency in removing the last paraffin residues in the tissue sections.

Another drawback is that the heating element used requires that sufficient contact is maintained between the surface on which the biological sample is placed and the heating element.

Embodiments of the invention aim to overcome the drawbacks with the prior art methods and systems.

Embodiments of the invention aim to reduce the risks of fire and explosion during, for example, processing of biological samples in the laboratory or during transport or storage of the clearing solvent.

Further, the fire/waste/workers safety etc may be of particular relevance in complex automated instruments with various moving robots and electrical circuits and in labs with poorly educated personnel. Also, the various paraffin sections can origin from various paraffin types and mixtures. It is an advantage to have a general method - which does not leave residues of embedding medium on the slide, since these residues of embedding medium can hamper the staining and the morphological pattern and information.

Especially, as IHC is becoming more quantitative and standardized, any embedding medium residues can lower or alter the staining intensity, resulting in wrong interpretations.

Further, embodiments aim to reduce the need for ventilation and airflow in the laboratory.

Further, embodiments aim to provide a simplified method for removal of embedding medium from embedded biological samples as compared to existing procedures.

Furthermore, embodiments aim to automate the processing and minimize manual handling.

Yet another aim of embodiments is to provide removal of embedding medium from an embedded biological sample using a reduced volume of the clearing solvent as compared to the volume of clearing solvent necessary in the conventional deparaffinization procedures.

Further embodiments aim to provide a simplified method for a dip tank version, e.g. a vertical mode, where the slides are placed vertically and solvents and reagents can be recycled and reused.

Further embodiments aim to provide a simplified method for a horizontal mode where the slides are treated horizontally with a minimum volume of clearing solvents and wash buffers.

### Summary of the invention

Embodiments of the invention fulfill the above-mentioned aims, among others, by removing the embedding medium using an efficient non toxic organic solvent and go directly to aqueous buffers.

The present inventors have realized that by using an efficient non toxic organic solvent it is possible to go directly to aqueous buffers without the use of alcohol. This is surprising, as great effort has been made in the past to optimize the dewaxing process by using organic solvents and to rehydrate the samples through series of alcohol/water steps. All prior art methods using organic solvents try to gradually change from a pure organic phase to an aqueous phase by using solvents (e.g. alcohol) which are compatible with both phases. The present invention does not attempt to use solvents which are compatible with both the organic and the aqueous phase.

The inventors have further realized that it is possible to use a simplified, fast and automated combination of efficient non-toxic clearing solvent, removal of the liquefied embedding media and aqueous washing cycles to obtain dewaxing results equal to or better than traditional methods using both toxic and flammable solvents.

The inventors have further realized that solid embedding media like paraffin can fast be made to liquefy by lowering their melting point by diffusing a clearing solvent into the solid surfaces. The process can be done at temperatures different or even far from their original melting point of the embedding medium.

Embodiments of the invention relates to a method, apparatus, a system, a computer-readable memory, and the use of a clearing solvent for removal of an embedding medium from an embedded biological sample in accordance with the claims 1, 12, 32, 33 and 34. Further embodiments are defined in the claims 2-11, and 13-31.

### Brief description of the drawings

The accompanying drawings, which are incorporated in and constitute a part of this specification, illustrate a number of non-limiting embodiments of the invention and, together with the description, serve to explain the principles of the invention. In the figures, elements with similar functions are prefixed with the same numeric identifier, and individual instances are identified with a hyphenated ordinal suffix.
FIG. 1A shows the top-view of an apparatus for the automatic pre-treatment and processing of biological samples;
FIG. 1B shows a schematic of an exemplary robot head used in an apparatus for the automatic pre-treatment and processing of biological samples;
FIG. 1C illustrates an exemplary system for the automatic pre-treatment and processing of biological samples;
FIG. 1D shows an exemplary system for the automatic pre-treatment and processing of biological samples;
FIG. 2A shows a block diagram of an exemplary API for control of stainer hardware sub-systems;
FIG. 2B shows a block diagram of an exemplary stainer logic and schedulers module for control of stainer program threads;
FIG. 3A shows a block diagram of an exemplary robot scheduler;
FIG. 3B shows a flowchart of an exemplary method for determining regular and time-critical task lists for a robotic head;
FIG. 3C shows a block diagram of an exemplary fluidics scheduler;
FIG. 3D shows a flowchart of an exemplary method for scheduling and allocating resources for a fluidics scheduler.
FIG. 4 shows a drop of reagent or clearing solvent on a sample on a carrier on a support.
FIG. 5 shows the drop of reagent or clearing solvent after a period of time such that the drop covers the entire sample;
FIG. 6 shows the same a little later, when the reagent or clearing solvent has mixed with the sample or is absorbed by the sample;
FIG. 7 shows the implementation of a vibrator within a sample carrier;
FIG. 8 shows the implementation of a vibrator within the support;
FIG. 9 shows three vibrators within a support;
FIGS. 10, 11 and 12 show alternative positions for a vibrator; and
FIG. 13 shows a vibrator embedded in a cover.

### Detailed description of the invention

Some embodiments of the present invention relates to a system, apparatus, composition and method for processing of biological sample, and especially to pre-treatment of embedded biological samples, e.g. removal of embedding medium from embedded biological samples by means of a clearing solvent.

By "biological sample" as used in this document is meant any collection of cells, either loose or in a tissue, which can be mounted on a sample holder including, without limitations, section of organs, tumor sections, bodily fluids, smears, frozen sections, blood, cytology preps, microorganisms and cell lines.

By "sample holder" is meant any medium that supports a sample. As used herein sample holder includes any support, such as a carrier, test tube, chip, array, disk, or slide, which can support at least one sample. Sample holder also includes a support for a group of supports such as a rack supporting a group of slides. Sample holder may further refer to a larger scale support, such as a slide rack holder that holds at least one smaller support, such as a plurality of slide racks, each rack containing a plurality of slides. A holder may releasable hold, securely hold, and/or hold in such a way that permits movement, such as vertical, horizontal or pivoting about one or more axis. In one embodiment, the sample holder may function as a sample holding means. Alternative embodiments of a sample holder comprise one or more carousels, trays, racks, carriers, holders, compartments, or other conveyance arrangements used for the handling and processing of samples and sample carriers any of which may be at least partially removable.

By "removing the embedding medium" or "removal of embedding medium" is meant removing or removal of a sufficient amount of the embedding medium from the embedded biological sample so as to permit the sample to be subjected to analysis. Typically such analysis is histochemical, and the amount of embedding medium that should be removed will be the amount sufficient to permit the analysis technique of choice to gain access to at least one of the reactive sites in the sample.

In the description text the wordings "dewaxing of the embedded sample" and "deparaffinization of the embedded sample", having the same meaning as "removing the embedding medium", will also be used.

Various modifications to the embodiments described will be readily apparent to those skilled in the art and generic principles disclosed herein may be applied to other embodiments. The described examples are exemplary only and embodiments described herein are not intended to limit the present invention. As such, the inventions are to be accorded the widest scope consistent with the principles and features described herein. All patents, patent applications, and other publications are hereby incorporated by reference in their entirety.

The term "comprise/comprising" when used in this specification is taken to specify the presence of stated features, integers, steps or components but does not preclude the presence or addition of one or more other features, integers, steps components or groups thereof.

The present disclosure relates, in part, to the field of software and hardware for the control, management, tracking, monitoring, scheduling, and diagnosing of automatic biological sample processing systems. In some embodiments, systems, methods, and apparatus according to the present invention allow for the automatic pre-treatment of the biological samples on slides or other carriers or substrates (hereinafter referred to generally as slides) in an automatic processing apparatus, such as an automatic staining apparatus (hereinafter referred to as a stainer) so that the entire processing of the biological samples may be performed automatically in a single physical apparatus.

The term "automated" or "automatic" means activity substantially computer or machine driven and substantially free of human intervention.

According to embodiments, the clearing solvent should have properties, which allows for fast softening, liquefying or dissolving of the embedding medium. Preferable, the clearing solvent can dissolve paraffin within minutes, or even more preferable within seconds at room temperature.

In embodiments, the clearing solvent or clearing agent is selected based on the physical properties, including the ability to fast diffuse into the embedding medium and lowering the melting point and thereby liquefy the embedding media. The liquefied embedding medium will thereafter easily be removed or further diluted before removal.

In embodiments, the clearing solvent has the following properties: low viscosity, low level of odor, low manufacturing price and high stability during storage and use.

In embodiments, the clearing solvent is not chemically reactive to prevent alterations of the sample. In other words, the clearing solvent is chemically unreactive in order to prevent alterations of the sample.

In some embodiments, the clearing solvent is able to hold a high concentration of embedding media, e.g. paraffin, in solution at room temperature. This will allow for the use of a minimum volume and prevent precipitation of e.g. paraffin.

In embodiments, the clearing solvent has the properties of high boiling point, low flammability and high or no flash point.

In embodiments, the clearing solvent is able to form emulsions with various reagents and solvents.

Examples of such clearing solvents, e.g. oils, are known from the foodstuff industry as cocking oils and from pharmaceutical industry for dissolving and stabilizing drugs and as emollients in cosmetics and as diluents in the paint industry.

It should be understood that the preferred clearing solvent or clearing agent is low or non-toxic for humans as well for the environment in general, to allow for easy destruction and waste handling.

In embodiments, the selection of an appropriate clearing solution or mixture may be accomplished by using Hansen's solubility model, which summarizes the dispersion, polar and hydrogen bonding properties of the solvent or embedding medium in a 3-dimensional space.

Properties such as density, vapor pressure, evaporation rate, flash point, boiling point, etc can more easily be tailored to the practical use while still maintaining an acceptable degree of solvency power.

Values for each of these parameters for a particular solvent or solute can be obtained from various literature sources. Methods are available in the literature for calculating or estimating the parameters for unusual solvents.

For a particular clearing solvent or solvent mixture, the resulting point in 3-dimensional space represents the solubility of the solute, and a roughly spherical shape surrounds the point and defines a 'radius of interaction' (Ir) for the solute. Solvents having 3-dimensional solubility parameters falling within the sphere will, in theory, dissolve the particular embedding media.

Embodiments comprise the step of providing and exposing an embedded biological sample to a clearing solvent that is capable of solubilizing or liquefying an embedding medium embedded in the embedded biological sample followed by an aqueous washing step. In some embodiments the clearing solvent is capable of lowering the melting point of the embedding medium.

In some embodiments, the clearing solvent will liquefy the embedding medium. The resulting liquid can be removed from the sample. In some embodiments, the liquid has a density lower than the subsequent aqueous washing buffer and will separates from the sample and lift to the surface of the aqueous buffer.

If for example a paraffin embedded biological sample is exposed to the clearing solvent Histo-Clear^{®} having a density to paraffin oil of about 0.84, the resulting Histo-Clear^{®} and paraffin liquid will separate from the sample and lift to the surface of the surface for easy removal when exposed to aqueous washing buffer having a density at approximately 1.00 or slightly higher due to its salt content.

In embodiments, most of the embedding medium is substituted by clearing solvent and liquefied before the slides are washed with aqueous buffers.

The differences in density of the clearing solvent and the aqueous wash buffer enhance the efficiency in separating the embedding medium from the sample. By manipulating e.g. the salt content in the aqueous wash buffer and the exact mixture of the clearing solvent, the density difference can be increased.

Examples of the clearing solvent comprise different types of organic solvent, but are not limited to, hydrogenated naphthalene, naphthenic hydrocarbons, d-Limonenes, paraffinic/isoparaffinic hydrocarbons, paraffinic-glycol etheter, an alkane hydrocarbon, or combination thereof.

Naphthenic hydrocarbons are sold under the brand names Formula 83^{™} and Histochoice.

d-limonenes are sold under the brand names Americlear, Bioclear, Clearene, Hemo-DE, Histoclear, HistoSolve X, Master Clear and Safsolv.

Paraffinic/isoparaffinic hydrocarbons are sold under the brand names Clearify, Clearing 100, Clear Rite 3, Isopar L, Micro-Clear, Micro-Clear-HC, Micro-Clear-R, Paraclear, Safe Clear, Safe Clear II, Shandon XY, Slide-Brite, Xy-Less, XS-3.

Paraffinic-glycol ether mixtures are sold under the brand name Pro-Par.

Further examples of preferred clearing solvents are, but not limited to, Histo-Clear^{®} or Histo-Clear^{®} II, which are complex mixtures of higher oils. Histo-Clear^{®} is a trade name for an organic solvent sold by National Diagnostics, Atlanta, GA. HistoClear (C₁₀H₁₆) is a naturally occurring hydrocarbon found in plants. Examples of synonyms to Histo-Clear^{®} are 1methyl4(1methylethenyl) cyclohexane pmentha1,8-diene, d-limonene, Safsolv (brand name, sold by BrodiSpecialty Products, Ltd.), histolene, dipentene.

Histo-Clear^{®}, like Xylene, may be a especially useful clearing solvent since many embedding media such as paraffin contain higher polymers are difficult to remove by the use of warm aqueous washing solutions, such as aqueous buffers.

Other examples of clearing solvents include various Alkane hydrocarbons, including pentane, heptane, hexane, octane and higher analogous and branched isomers, including dodecane.

Yet other examples of clearing agents include toluene, chlorobenzene, 1-methylnaphthalene, diisobutyl ketone, biphenyl and various halogenated solvents and mixture hereof.

Another example of a suitable clearing solvent is Citrisolv from Fisher Scientific. CitriSolv is a d-Limonene-based solvent that may be used as a safe alternative to xylene and ethyl acetate.

Other examples of suitable clearing solvents are oils or mixtures based on animal, vegetable or mineral sources.

Of particular interest are low or non-toxic solvents or oils, comprising animal and vegetable oils. Vegetable oils can be esters of glycerin and a varying blend of fatty acids.

Examples of sources for vegetable oils comprise, but are not limited to, oilseeds like cashew, castor bean, coconut seed, flax seed, grape seed, hemp, mustard, poppy seeds, rapeseed, canola, safflower, sesame seed, sunflower.

Yet other sources of vegetable oils comprise, but are not limited to, almond, apricot, avocado, maize, cotton, cocoa seed butter, coconut, fusarium, hazelnut, neem, olive, palm and palm kern, peanut, pumpkin, rice, soyabean, and walnut.

Preferred oils comprise, but are not limited to, oils or mixtures of oils from Soybeans, Palm, Rapeseed, Sunflower seed, Peanut, Cottonseed, Palm Kernel and Olive.

Even more preferred vegetable oils comprise, but are not limited to, hydrogenated vegetable oils and refined oils and mixtures based on caprylic and capric fatty acids like Akomed R.

Some embodiments may further comprise a suitable surfactant or detergent that may further improve the deparaffinization procedure by lowering the surface tension of the clearing solvent, e.g. Histo-Clear^{®}, which allow easier spreading, and by lowering the interfacial tension between the clearing solvent, e.g. Histo-Clear^{®}, and the embedding medium.

By "surfactant" is meant an agent that lowers the surface tension of a liquid which allow easier spreading, and an agent that lowers the interfacial tension between two liquids.

It should be understood that by the term surfactant is meant the large group of neutral, anionic or cationic compounds, or a mixtures of compounds which can act as detergent, emulsifier, solubilizer, wetting agent, or dispersant or have a combination of these properties.

After removing the embedding media according to the present invention using a clearing solvent, the subsequent aqueous washing step may be of importance.

It is known that various detergents or surfactants can improve the washing efficiency and removal of clearing solvent. Numerous surfactants are known, including, but not limiting to, tween20 (ethoxylate derivate polysorbate 20, Tween is a trademark of ICI Americas Inc.), tween80, NP40 (octylphenolpoly(ethylenen-glycolether), Nonidet^{®}P40, Nonidet^{®} is a trademark of Shell International Petroleum Company Limited), brijl and the pluronics and tetronics (BASF) family of surfactants, or Span80 (Sorbitan mono oleate). Preferred detergents include tween20 and NP40.

Embodiments of the inventive based method for pretreatment of embedded biological sample, comprise the steps of:
- providing a clearing solvent, e.g. an organic solvent, capable of lowering the melting point of an embedding medium or dissolving of an embedding medium;
- exposing the embedded biological sample to the clearing solvent, whereby the embedding medium is liquefied;
- providing a washing solution capable of removing the clearing solvent and the liquefied embedding medium from the biological sample, said clearing solvent and washing solution being immiscible; and
- optionally rinsing the sample with deionized water.

In embodiments, the step of providing the clearing solvent further comprises the step of providing a processing tank comprising an amount of the clearing solvent. In embodiments, the step of exposing the sample to the clearing solvent comprises the step of immersing the sample in the processing tank. In some embodiments, the sample is vertically immersed in the processing tank.

In embodiments, the step of providing the clearing solvent comprises the step of providing supply means for supplying the clearing solvent to the embedded biological sample. The supply means may comprise a source of clearing solvent, a supply nozzle and supply tubings for supplying the clearing solvent from the source to the supply nozzle whereby the clearing solvent can be supplied to the sample through the nozzle.

In embodiments, the step of exposing the embedded biological sample to the clearing solvent comprises the step of rinsing the sample with the clearing solvent. In some embodiments, the rinsing is accomplished by means of the supply means. In some embodiments, the sample is rinsed under a continuous flow of clearing solvent for a predetermined time period. According to other embodiments, the sample is rinsed during several rinsing periods; each rinsing period having a predetermined length of time and two rinsing periods being separated by a non-rinsing period of predetermined length of time.

The rinsing steps described above, also referred to as a rinsing cycle, may be repeated a desired number of times, e.g. two to three times or more.

In embodiments, the step of removing the clearing solvent further comprises the step of providing a mechanical means capable of accomplish the removal of the clearing solvent. The clearing solvent may for example be removed completely or partially by means of an air blower configured to blow the clearing solvent off the sample or the clearing solvent may be removed by a suction device configured to suck up the solvent. As an alternative, the air blower may be configured with a suction capability whereby the clearing solvent may either be blown off or sucked up by the air blower.

In some embodiments, the supply means, e.g. the supply tubings or supply nozzle, is provided with an air nozzle for blowing air onto the slide in order to dry the slide or to blow away possible fluid on the slide, e.g. a clearing solvent or a washing solution.

In some embodiments, a centrifuge may be used to remove the fluid, whereby the fluid is removed by means of the centrifugal force caused by the centrifuge. The centrifuge may be configured to rotate around one or more axes of rotation. The axis of rotation may be an axis in or parallel with the plane of the slide or an axis perpendicular to the plane of the slide.

In some embodiments, the slide is mounted on one or more attachment points or to a fixture, which allows the slide to be tilted or rotated slow or fast to assist efficient removal o liquids from the slide.

In some embodiments, the removal of the fluid from the sample is accomplished by means of the gravitation. The slide with the sample may for example be put in a vertical position whereby the fluid will flow off the slide due to the gravitation.

In embodiments, the optional step of providing a washing solution to wash off possible residues of embedding medium from the sample comprises the step of providing washing solution supply means for supplying the washing solution. The washing solution supply means may comprise a source of washing solution, a washing solution supply nozzle and washing solution supply tubings for supplying the washing solution from the source to the sample via the supply nozzle. In some embodiments the supply of washing solution and the washing of the sample is automatically controlled. In embodiments, the clearing solvent supply means is configured to function as the washing solution supply means.

According to embodiments, the washing solution is an aqueous buffer solution capable of removing the liquefied embedding medium and is immiscible with the clearing solvent. Examples of an aqueous buffer solution are, but not limited to, Tris-Buffered Saline Tween-20 ("TBST"), PBS, and Hepes.

An advantage with not using alcohol or another solvent miscible in both the clearing solvent, e.g. Histo-Clear^{®}, and the aqueous buffer solution is that we go directly from clearing solvent, e.g. Histo-Clear^{®}, to an aqueous buffer possibly comprising a detergent.

The traditional use of a sequence of alcohol treatments was done to change from an organic to an aqueous phase in the tissue. By completely avoiding the traditional alcohol steps, the entire process is simplified and consequently the inconvenience of alcohols flammability and toxicity is avoided.

It should be understood that not even the pure alcohol, but also the various water-alcohol mixtures does not need to be used in the present invention.

The amount of waste from the dewaxing process can be reduced. Also, the nature of the waste is changed to not contain alcohols or alcohol mixtures.

Further, the regulatory and health problems of having large amounts of alcohols are avoided.

By using non-toxic or low toxic clearing solvents according to the present invention, the total dewaxing process is both simplified, made safer and as efficient as traditional dewaxing methods.

By "miscible" is meant capable of being mixed in any ratio without separation into two or more phases.

In some embodiments, the sample is exposed to the clearing solvent or the aqueous washing solution when the slide is in a horizontal position.

An advantage with embodiments providing deparaffinization on horizontal slides without the use of processing tanks is that they avoid or eliminate cross-contamination or carry-over, which may occur in processing tanks.

By "cross-contamination" or "carry-over" is meant a process by which materials are carried into a reaction mixture to which they do not belong. These materials can be either parts of a sample, or reagents. In such cases, carry-over means the transfer of material, e.g. specimen or reagents, from one container, or from one reaction mixture, to another one. It can be either unidirectional or bidirectional in a series of specimens or assays.

Also, by treating the slides individually, numerous treatment protocols can be run in parallel on many different slides. Also, the slides may not be loaded to the stainer at the same time - but can be added and removed in a continuous mode.

By having the slides in a horizontal position, reagents, clearing agents, wash buffer and similar can stay on the sample for prolonged periods.

The term "reagent" may include any fluid or gas of chemical or biological material applied to a sample carrier, e.g. a slide, including, but not limited to, aqueous mixtures, biological probes, polymerase, antibodies, digestion enzymes, pre-fixatives, post-fixatives, readout chemistry, stain and dyes, markers chromogens, fluorophores, and clearing solvents.

In embodiments of the invention, the possibility of cell carry-over from one slide to another is eliminated since the sample slides are subjected only to fresh-filtered clearing solvent, and the horizontal, co-planar, spaced orientation of the sample slides in the sample holder prevents possible cross-contamination by cell carry-over between slides during the deparaffinization process.

Another advantage is that the processing tank does not have to be cleaned between different steps, e.g. between a pretreatment step and further sample processing steps, whereby the processing speed can be increased and the processing time, e.g. the Total Assay Time ("TAT"), i.e. the time for processing an assay, can be reduced.

Another advantage is that the processing tank can be prewarmed for target retrieval while the slides are dewaxed.

Yet another advantage with embodiments providing deparaffinization on horizontal slides is that the clearing solvent volume required can be reduced. With horizontal washing is it for example possible to use a smaller volume of clearing solvent per slide as compared to vertical washing using processing tanks. Preferably, the volume of the clearing solvent is less than 10 milliliters per slide and rinsing cycle. More preferably, the volume of the clearing solvent is less than 2 milliliter per slide and rinsing cycle. Even more preferably, the volume of the clearing solvent is less than 300 microliters per slide and rinsing cycle.

It should be understood, that it may be preferred to have several drop zones on the slide. If the sample is large, several drop zones for clearing agent, reagents and wash buffer can be used. Similarly, a small sample only needs one drop zone to be efficiently covered. In some embodiments, the volume of the fluid delivered to the drop zone depends on the size of the drop zone and/or on the number of drop zones on the slide.

Furthermore, using horizontal washing, only the side of the slide having the sample needs to be exposed to the clearing solvent.

It should be understood that the previous description of the invention also can be done an elevated temperatures. In general, the solvency power will increase with increased temperature. By raising the temperature above ambient temperature during any of the steps of the invention, the dewaxing will be even more efficient. In particular, the first infiltration step of the clearing solvent through the solid embedding medium may be increased by temperature.

The present invention has been tested on the Autostainer^{™} System (LabVision Corporation). However, as understood by those skilled in the art, the invention can be realized in any automatic sample processing system, and the examples below are only intended to clarify the invention without imposing any limitations to the invention.

The Autostainer^{™} System (LabVision Corporation) is an example of an automated slide processing system. The stainer is compatible with currently available reagents for staining paraffin-embedded and frozen tissue sections, cytospins, cell smears, and fine-needle aspirates, for example. The stainer is designed to automate manual staining methods routinely used in immunohistochemistry and cytochemistry. Flexible programming allows for an unlimited number of protocols containing up to 35 steps, including rinse and blow steps between different processing steps, and 64 different reagents. A staining run can process from 1 to 48 microscope slides. Individual slides can be programmed to receive different reagents, of specified volume, during any step in a staining protocol, and waste is segregated into hazardous and non-hazardous collection containers, reducing disposal costs. The stainer is further designed to track a variety of data. It can generate patient, reagent, and real-time operation data reports, as well as track reagent usage and log instrument maintenance.

The stainer has a reagent dispenser or probe with a level sensor (not shown). The sensor uses the change in capacitance to sense the liquid level in reagent containers. If the measured capacitance is very low, as for some clearing solvents, the sensitivity of the sensor can be adjusted or the sensor can be partly over ruled or switched off.

Alternatively, the clearing solvent can be added compounds which help the sensor detect the liquid, or the sensor can be changed or supplemented with a different type, like an optical or radar type of level sensing.

In some embodiments, the method of removing embedding medium from an embedded biological sample using an processing apparatus, such as the Autostainer^{™}, may comprise the steps of:
- manually applying Histo-Clear^{®} twice to the sample on the sample carrier;
- washing the sample twice according to standard stainer wash cycles;
- performing standard target retrieval e.g. heating the slide in a TRIS/EDTA buffer at pH 9 or a citrate solution at pH 3-5 containing detergents for 20-40 minutes at 95-100 degrees C or subjecting the slides to enzymatic treatment; and
- performing standard stainer immunohistochemistry e.g. according to a Herceptest protocol.

In embodiments, the processing steps were accomplished on horizontal slides. The horizontal processing may comprise the steps of:
- applying e.g. up to 600 microliters, e.g. 100, 200, 300 or 400 microliters, of a clearing solvent, e.g. Histo-Clear^{®}, to the sample on the sample carrier;
- incubating/waiting 2 minutes;
- removing the Histo-Clear^{®};
- applying 600 microliters Histo-Clear^{®} to the sample;
- incubating/waiting 2 minutes;
- removing the Histo-Clear^{®} and the liquefied embedding medium by means of an air blow from an air blower;
- providing a Tris-Buffered Saline Tween-20 ("TBST") buffer wash cycle, comprising the step of applying 10 milliliters of the buffer solution to the sample on the sample carrier followed by the step of removing the TBST buffer;
- applying 600 microliters of TBST buffer to the sample on the sample carrier;
- incubating/waiting 2 minutes;
- providing a TBST buffer wash cycle, comprising the step of applying 10 milliliters of the buffer solution to the sample on the sample carrier followed by the step of removing the TBST buffer;
- applying 600 microliters of TBST buffer to the sample on the sample carrier;
- incubating/waiting 2 minutes; and
- applying deionized ("DI") water to the sample, e.g. rinsing the sample with deionized water.

This procedure may be followed by standard target retrieval using target retrieval solutions, such as S3308 or S1700 from Dako, and using microwaves.

Embodiments of the non-alcohol, non-xylene based method for removal of embedding medium from an embedded biological sample has been tested for deparaffinization of Formalin Fixed Paraffin Embedded ("FFPE") tissue on slides. Five experiments, I - V, will be described below.

Any traces of paraffin after deparaffination were carefully monitored on all slides. Taking advantage of paraffin's birefringence (double refraction) it is possible to visualize paraffin residues that would be difficult to detect otherwise in normal bright field microscopy.
Care was taken to differentiate between paraffin and other species exhibiting birefringence such as collagen. The birefringent paraffin residues were visualized under crossed polarized light on an Olympus BX51 microscope equipped with a U-ANT analyser and a U-POT polarizer.

Experiment I relates to manual dewaxing in HistoClear^{®} followed by rehydration and removal of the HistoClear^{®} in TBST stainer buffer, experiment II relates to manual dewaxing in Histo-Clear^{®} followed by automatic TBST buffer wash on the Autostainer^{™}, experiment III relates to manual dewaxing in Histo-Clear^{®} followed by automatic TBST buffer wash on the Autostainer^{™} with haematoxylin/eosin staining and a CD68 and EMA immunostaining, experiment IV relates to manual horizontal dewaxing with Histo-Clear^{®} and experiment V relates to horizontal dewaxing with Histo-Clear^{®} on the Autostainer^{™}.

Experiment I: Manual dewaxing in Histo-Clear^{®} was followed by rehydration and removal of the Histo-Clear^{®} in TBST stainer buffer.
In this experiment, Formalin Fixed Paraffin Embedded ("FFPE") tonsil tissue was used. The test included a control dewaxing of duplicate slides performed as a standard dewaxing in 200 ml Coupling jar (Ziehl-Nielsen) using xylene and alcohol; 2x5 minutes in a xylene bath, 2x 3 minutes in a 96% alcohol bath and 2x 3 minutes in a 70% alcohol bath and 5 minutes in a water bath.

The dewaxing in Histo-Clear^{®} was performed manually in two steps. In the first step the slides were immersed two times in approximately 200ml fresh Histo-Clear^{®}, each time for 5 minutes. In the second step, rehydration/washing was accomplished by immersing the slides four times in approximately 200ml TBST buffer (Dako code no. S3006 diluted 10x) for one minute each time. Three slides were processed at room temperature and three slides at 40 to 50 degrees C.

All slides, including the control, were transferred into 400ml Target Retrieval Citrate buffer pH 6,0 (Dako S 1700) comprised in a 0,5L container at room temperature and target retrieval was performed in microwave oven; 13 minutes at 800W. The slides in the target retrieval buffer were cooled at room temperature for 20 minutes. A haematoxylin (Hæmatoxylin Mayer, Bie & Berntsen LAB00254) staining was performed on all the slides; 2 minutes in haematoxylin followed by 5 minutes in tap water and finally mounted in aqueous mounting medium (Dako S3025).

In a light microscope, the slide dewaxed in Histo-Clear^{®} and washed in 40-50 degrees C buffer wash looked very similar to the control, whereas it was difficult to determine if the slide dewaxed in Histo-Clear^{®} and washed in buffer at room temperature had a slight bit of paraffin residues artifact. However, all 3 slides presented an acceptable dewaxing.

Experiment II. Manual dewaxing in Histo-Clear^{®} was followed by automatic TBST buffer wash on the Autostainer^{™}.

This experiment was testing the possibility of performing the washing with TBST buffer using the Autostainer^{™}. The dewaxing in Histo-Clear^{®}, Target Retrieval and haematoxylin staining were still performed manually. The treated tissue was again tonsil (FFPE) and it included a control performed with standard dewaxing as described above.

The Histo-Clear^{®} dewaxing was performed in a processing tank as described in experiment I. The slides were transferred directly to the slide rack in the Autostainer^{™} and manually added TBST buffer. Each slide was treated as follows; 10ml TBST buffer, buffer was blown off, added 600µl TBST for 5 minutes, this was repeated once more and finally treated with 10ml deionized water. The treatment with TBST buffer was performed at room temperature.

After the wash in TBST, a Target Retrieval was performed additionally with a haematoxylin staining, both procedures as described above.

The slides were evaluated in a broad field microscope, and both treatments of the slides presented an acceptable dewaxing. No residues were visible.

Experiment III. Manual dewaxing in Histo-Clear^{®} followed by automatic TBST buffer wash on the Autostainer^{™} with haematoxylin/eosin staining and a CD68 and EMA immunostaining.

Four slides of tonsil tissue were dewaxed with Histo-Clear^{®} as described in experiment I, followed by wash with TBST using the Autostainer^{™} as described in experiment II. As a reference, two slides of tonsil tissue were dewaxed as standard, as described in experiment I. Target Retrieval was performed on all six slides, this time in water bath; 400ml 95-99 degrees C of Target retrieval Citrate buffer pH 6,0 for 20 minutes, and another 20 minutes for cooling down at room temperature.

Two of the slides that have been dewaxed in Histo-Clear^{®} were haematoxylin stained as described in experiment I, one was mounted in aqueous mounting medium and the other one was eosin stained as follows: after the haematoxylin staining, the slide was immersed in a 0,4926g/l eosin (Bie & Berntsen, LAB44190.1000) in 70% ethanol/ 0,01M HCL for 2 minutes, 5x dip in 96% ethanol, 10x dip in 96% ethanol, 20 dip in 99,9% ethanol, 2 minutes in 99,9% ethanol and 30 seconds in Xylene, dried for 45 minutes and mounted with Permanent mounting medium (Dako S3026).

The last four slides were immunostained using the Autostainer^{™}; two of the slides were used to identify macrophages using monoclonal mouse anti-Human CD68 clone KP1 (Dako M 0814), one slide dewaxed with Histo-Clear^{®} and the other one dewaxed in Xylene. Regarding the last 2 slides, monoclonal mouse anti-Human Epithelia Membrane Antigen ("EMA") (Dako M 0613) was used as an Epithelia cells marker, and again one of the slides was dewaxed in Histo-Clear^{®} and the other in xylene. The immunostaining was performed as follows; 5 min peroxidase blocking (Dako K5204), 10 minutes antibody (both diluted 1:100), 30 minutes EnVision GaM/GaR-HRP (Dako K5007) and 10 minutes DAB+ (Dako K5007), and finally haematoxylin stained as described above and mounted in aqueous mounting medium.

The immunostaining and haematoxylin/eosin staining was evaluated and each slide presented an acceptable dewaxing, as no paraffin residues were visible and any potential non detectable residues of paraffin did not hinder the immonostaining.

However, there was a difference in the immunostaining of macrophages using CD68 antibody when comparing the two dewaxing methods. The slide dewaxed with Histo-Clear^{®} presented what seemed to be a higher background than the standard dewaxed slide. The immunostaining to identify the epithelia membrane cells showed no significant difference between the two slides.

Regarding the haematoxylin/eosin staining, the cytoplasmic staining with eosin did hide possible artefacts due to paraffin residues.

Experiment IV. Manual horizontal dewaxing with Histo-Clear^{®}.

In the experiments I - III described above, the dewaxing has been performed by immersing slides into a processing tank comprising a clearing solvent. In this experiment, a horizontal dewaxing with a small amount of Histo-Clear^{®} has been tested.

All the same procedures and controls - standard dewaxing - were performed as in experiment III, except for a 1:150 dilution of the CD68 antibody in this experiment.

The dewaxing was performed as follows; four slides were placed in horizontal position in an Autostainer^{™} rack upon a tray to collect the clearing solvent. 600µl Histo-Clear^{®} was applied onto the slides. However because of the low density of the Histo-Clear^{®}, some of the Histo-Clear^{®} was dripping off the slide into the tray. After 3 minutes the Histo-Clear^{®} was removed by 10 ml Histo-Clear^{®} from a disposable pipette. This was repeated once again. The slides were transferred to the Autostainer^{™} for a TBST wash and followed by target retrieval, immunostaining and Haematoxylin and H/E staining as in experiment III.

The slides were evaluated and they were all acceptable regarding dewaxing as seen in the microscope at normal setting.

By comparing the slides with macrophages marker, dewaxed in Histo-Clear^{®} against the standard dewaxed slide, there was a higher background using Histo-Clear^{®} as clearing solvent. Both slides, which have been immunostained to identify epithelia cells, are presenting an acceptable staining similar to each other.

Experiment V. Horizontal dewaxing with Histo-Clear^{®} on the Autostainer^{™}.

This experiment was a test of a horizontal dewaxing performed on the Autostainer^{™} together with a test of the no alcohol, no xylene dewaxing of Colon and Cerebellum tissue from a multi block (FFPE). Another marker was used, mouse anti-Human CD34 class II clone QBEnd-10 (Dako code no M7165), for the immunostaining.

Four slides each mounted with sections from a multi tissue block containing a variety of different organ samples (Tonsil, mammae carcinoma, colon carcinoma, liver, carcinoid liver, melanoma metastases, colon, prostate, kidney, cerebellum and pancreas) were placed in the slide rack in the Autostainer^{™}. Paper tissues were placed in the bottom of the reagent tray to collect the Histo-Clear^{®}, preventing it getting into the waste pipes. 600 microliters of Histo-Clear^{®} was added onto the slides. After 6 minutes of dewaxing, Histo-Clear^{®} was removed using the air stream from the Autostainer^{™}, i.e. the blow function. This was repeated once more.

The slides were washed with TBST buffer as described in experiment II and target retrieved in water bath; two slides - one dewaxed in Histo-Clear^{®} and the other one dewaxed in Xylene - in 95-99 degrees C Target Retrieval buffer high pH (Dako S3308) and the other slides in 95-99 degrees C Citrate buffer pH 6,0 (Dako S1700).

Two slides dewaxed in Histo-Clear^{®} were haematoxylin stained and one of them also eosin stained as described above. The last four slides were immunostained using the Autostainer^{™}; 5 minutes Peroxidase blocking, 30 minutes anti-Human CD34 antibody (1:50), 30 minutes EnVision GaR/GaM-HRP and 2x 2 minutes DAB+, and finally a haematoxylin staining and an aqueous mounting, all as described above.

All the slides were evaluated, and they all presented an acceptable dewaxing. The Tonsil, colon and cerebellum tissue had no paraffin residues. However, using the TR buffer high pH for Target Retrieval, the cuts showed backgrounds on both slides - dewaxed in Histo-Clear^{®} and Xylene -, whereas the Target Retrieval using the Citrate buffer pH 6,0 showed no background on any of the cuts on both slides, and performed a fine immunostaining.

As shown by the described experiments, surprisingly the paraffin can be removed with clean Histo-Clear^{®} and standard stainer wash buffer at room temperature; both in a processing tank arrangement and in a horizontal position. Even more surprisingly, using only 1.2 ml Histo-Clear^{®} and two standard wash cycles on the Autostainer^{™} seems to be sufficient. This is also most likely the extreme minimum of needed slide treatment.

A combination with active mixing, e.g. surface acoustic waves ("SAW"), which will be described below, may further improve the process.

**Table 1. Data for some clearing solvents**

| Clearing solvent | Histo-Clear^{®} | Histo-Clear^{®} II | Formula 83^{™} | Clear-Rite^{™} 3 | Pro-Par |
|---|---|---|---|---|---|
| Material Safety Data Sheets (MSDS) | 10/6/2004 | 04/27/2001 | Rev 10/04 | US: 6-1-94 DK: 21.08.2004 | April 2005 |
| Reagent type | d-Limonenes | d-Limonenes | Naphthenic hydrocarbons | Paraffinic hydrocarbons | Paraffinic-Glycol Ether |
| Amount of oil | 100 % | 10-30% | - | - | - |
| Boiling Point (BP) | 179 °C (355 °C) | 163-182°C (325-360 °F) | 119-145°C (246-293 °F) | 116-176°C (241-349 °F) | 155-180°C (311-356 °F) |
| Flash Point (FP) | 49 °C (120°F) | 40 °C (104°F) | 7.2°C (min 45 °F) | 23.3°C(74°F) | 40 °C (104°F) |
| Flammable limits | LEL 0.7 vol% | LEL 1.2 vol% | LEL 1.3 vol% | LEL 1.3 vol% | - |
| | UEL 6.1 % | UEL 9.6 % | UELO 10.2 vol% | UEL 10.5 vol% | - |
| Autoignition temperature | Not available | 293 °C (559 °F) | 250 °C (482 °F) | US: 293 °C (560 °F) | - |
| | | | | DK: not auto-ignitable | |
| Smell / appearance | Strong citrus smell | Light citrus smell | Clear, flowing | Clear, mild sweet scent | Clear, colorless; characteristic smell |
| Density g/cm³ | 0.84 | 0.84 | n.d. | 0.73 | 0.75 |

In some embodiments, a method for processing slides comprises introducing one or more new slides into a sample processing apparatus, e.g. a stainer, obtaining slide identification information for at least one of the one or more new slides, obtaining a treatment protocol sequence for the at least one of the one or more new slides from a database associated with the stainer using the slide identification information, and processing the new slide according to commands in a command list corresponding to the treatment protocol sequence for the at least one new slide of the one or more new slides. In some embodiments, one or more new slides are introduced into the stainer while the stainer is processing of any old slides previously presented to the stainer.

In some embodiments, a treatment protocol sequence for the at least one new slide may be obtained from the database associated with the stainer by retrieving an individual slide record containing the treatment protocol sequence for the at least one new slide using the slide identification information on the at least one new slide.

In some embodiments, processing the at least one new slide according to commands in a command list corresponding to the treatment protocol sequence for the at least one new slide further comprises creating a list of stainer commands corresponding to individual processing steps in the treatment protocol sequence for the at least one new slide and executing commands in the command list in order on the stainer on the at least one new slide. In some embodiments, processing the new slide according to commands in a command list corresponding to the treatment protocol sequence for the at least one new slide of the one or more new slides is performed autonomously by the stainer.

In some embodiments, slide identification information for the at least one new slide may be obtained by reading a label containing the encoded slide identification information affixed to the at least one new slide. In some embodiments, slide identification may be obtained by reading a glyph that contains the encoded slide identification information. In some embodiments, slide identification information for the at least one new slide may be obtained by reading a radio frequency identification tag associated with the at least one new slide.

In some embodiments, the database associated with the stainer may be accessed for other purposes including slide pre-processing, data entry, queries, and report generation concurrent with the processing of any old slides previously presented to the stainer. Slide pre-processing includes creating or updating slide records pertaining to slides in the database associated with the stainer and generating labels containing slide identification information for affixment to slides.

In some embodiments, executing commands in the command list in order on the stainer on the at least one new slide further comprises determining if prerequisites for execution of a next command on the command list have been satisfied, taking corrective action if prerequisites for execution of the next command in order on the command list have not been satisfied, and executing the next command when prerequisites for execution of that command have been satisfied. In some embodiments, executing the next command when prerequisites for execution of that command have been satisfied further comprises applying a reagent to the at least one new slide and updating at least one database record in the database associated with the stainer to reflect the completion of execution. In some embodiments, determining if the prerequisites for execution of the next command on the command list have been satisfied further comprises obtaining information on reagents to be used in executing the next command and determining if an adequate quantity of the reagent is available.

In some embodiments, taking corrective action if prerequisites for execution of the next command in order on the command list have not been satisfied further comprises alerting an operator about prerequisites for the next command that have not been satisfied and monitoring unsatisfied prerequisites for the next command for changes in status.

In some embodiments, updating at least one database record in the database associated with the stainer to reflect the completion of execution further comprises updating at least one database record elected from a group consisting of a slide log to reflect the actions taken on the at least one new slide, a reagent log to reflect the actions taken on a reagent, and a stainer log to reflect the actions taken by the stainer.

Some embodiments of the invention also include a method for performing operations over a network on at least one stainer of a plurality of stainers connected in a LAN, comprising establishing a network connection with the at least one stainer in the LAN, sending commands to the at least one stainer over the network connection, and receiving responses corresponding to commands sent to the at least one stainer over the network connection. In some embodiments, establishing a network connection with the at least one stainer is initiated from a device within the LAN.

In some embodiments, establishing a network connection with the at least one stainer in the LAN further comprises establishing a network connection with an agent within the LAN, wherein the functions of the agent comprise relaying commands to, and responses from the at least one stainer, and relaying queries to, and returning responses from, a database associated with the plurality of stainers, wherein the database includes information including status information about stainers, slides, consumables, and treatment protocols associated with the plurality of stainers. In some embodiments, the agent is a software tool that also provides a defined interface for an external application through which operations may be performed on the at least one stainer over the network. In some embodiments, the external application is a laboratory information system.

In some embodiments, the operations performed over the network on the at least one stainer include running diagnostic tests and retrieving diagnostic information. In some embodiments, the diagnostic information is used to automatically schedule service on the at least one stainer, if the diagnostic information indicates that such service is to be performed. In some embodiments, the operations performed over the network on the at least one stainer include performing one or more of software and firmware updates.

In some embodiments, the operations performed over the network on the at least one stainer include obtaining information on stainer consumable usage. In some embodiments, information on stainer consumable usage could include aggregate stainer consumable usage for the plurality of stainers. In some embodiments, the information on stainer consumable usage includes reagent usage information and bulk fluid usage information. In some embodiments, the information on stainer consumable usage is used to make a determination regarding the ordering of additional supplies of one or more consumables. In some embodiments, the ordering of additional supplies of one or more consumables is done automatically. In some embodiments, the ordering of additional supplies of one or more consumables is based on an economic order quantity. In some embodiments, the ordering of additional supplies of one or more consumables is based on a predefined plan for the ordering of consumables subscribed to by an entity operating the stainer network.

In some embodiments, the operations performed over the network on the at least one stainer include monitoring the status of slides being processed by the at least one stainer apparatus. In some embodiments, the operations performed over the network on the at least one stainer include obtaining a real-time estimate of the completion time of any of the slides being processed by the at least one stainer. In some embodiments, a real-time estimate of the completion time may reflect the effect of user actions or other unscheduled events such as the introduction or removal of reagent bottles from the stainer, or changing a priority of a slide rack in the stainer, or introducing new slides into the stainer.

In some embodiments, the operations performed over the network on the at least one stainer include obtaining images of samples on slides being processed by the at least one stainer. In some embodiments, the images of the sample may be taken with an appropriate magnification and resolution. In some embodiments, the operations performed over the network on the at least one stainer include obtaining status information pertaining to slides that have not been loaded into the stainer. In some embodiments, all information exchanged with the stainer over the network connection, including all commands sent to the stainer over the network connection and all responses received over the network connection, are encrypted.

Some embodiments of the present invention also include a method comprising steps for adaptively scheduling robot tasks in a time interval for a robot coupled to a stainer. In some embodiments, the robot treats slides that are coupled to the stainer according to a treatment protocol using reagents in reagent bottles or fluid containers coupled to the stainer. In some embodiments, the steps in a method to adaptively schedule robot tasks in a time interval comprise creating a robot task list comprising all robot tasks that are ready for execution within the time interval, calculating a robot task priority for each robot task in the robot task list, sorting the robot task list in descending order of robot task priority, and adding robot tasks starting from the top of the sorted robot task list to a robot task execution queue until the robot is fully utilized in the time interval, or the robot task list is exhausted.

In some embodiments, creating the robot task list further comprises adding robot tasks that have been generated as a result of contemporaneous events to the robot task list. The contemporaneous events comprise one or more of introducing new slides into the stainer, adding or removing reagent bottles or fluid containers, and altering a priority assigned to one or more slide racks on which the slides are mounted. In some embodiments, the robot may performs tasks of many types comprising one or more of moving the robot to a position within the stainer, mixing reagents for a slide, applying a reagent to a slide from the reagent bottle or the fluid container, air blowing a slide, tipping a slide to a horizontal or a vertical position; and capturing an image of a slide. In some embodiments, applying a reagent to a slide from the reagent bottle or the fluid container further comprises one or more of applying a buffer to a slide, and applying deionized water to a slide.

In some embodiments, the steps in a method for adaptively scheduling robot tasks in a time interval are performed autonomously by the stainer, which may exercise control over the robot and its operations. In some embodiments, the steps are repeatedly executed for successive time intervals starting from the time at which the stainer is first powered on. In some embodiments, the steps are executed concurrent with the performance of other stainer and robot tasks.

In some embodiments, calculating a robot task priority for each robot task in the robot task list further comprises calculating a score for each robot task based on a mathematical function of sub-scores assigned to individual task parameters. In some embodiments, the individual task parameters further comprise the earliest start time for a task, the latest start time for a task, the time duration to execute the task, the location of the robot, the priority of the rack on which a slide associated with the task is mounted, and a predetermined relative priority for the robot task type. In some embodiments, a predetermined relative priority for a robot task may be one of high or low. In some embodiments, certain robot tasks may be designated highest priority and added directly to the top of the robot's execution queue.

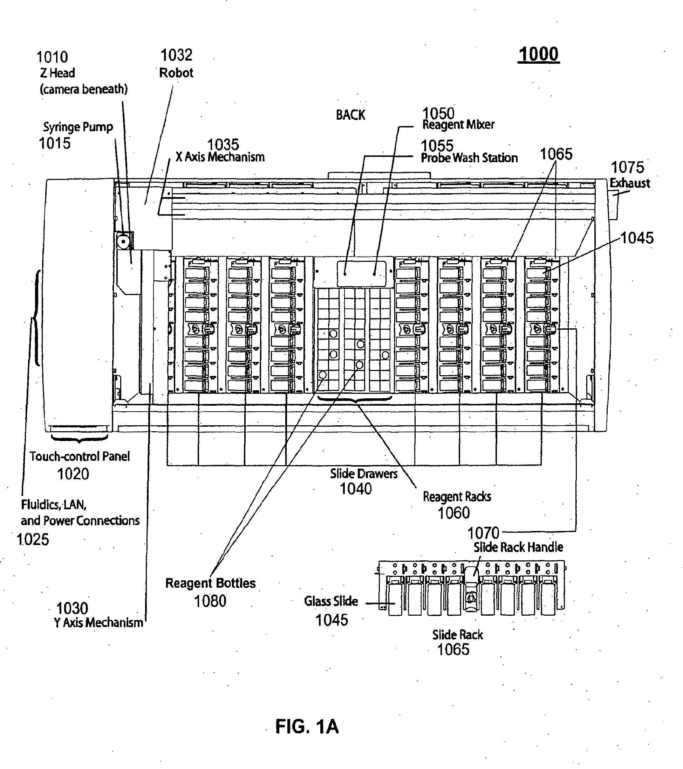

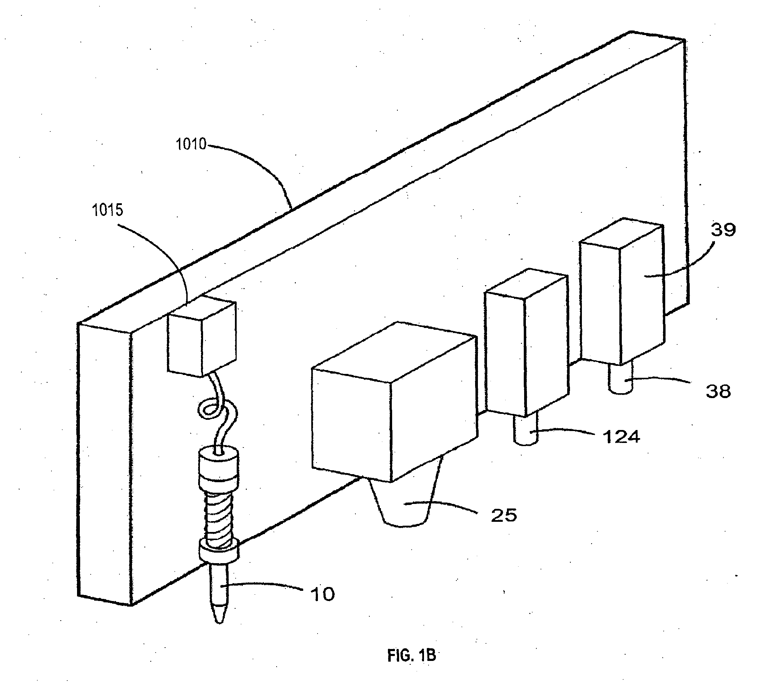

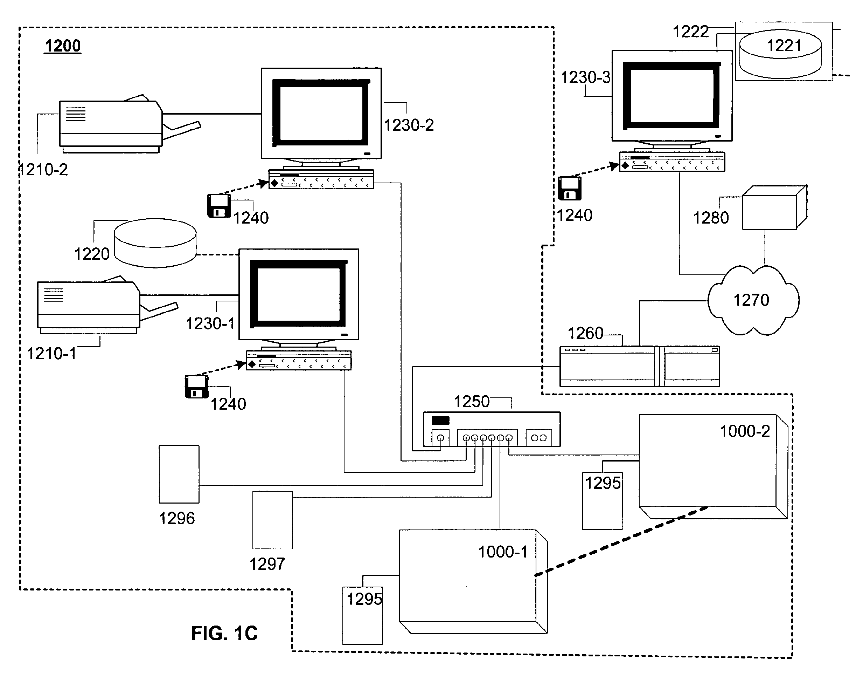

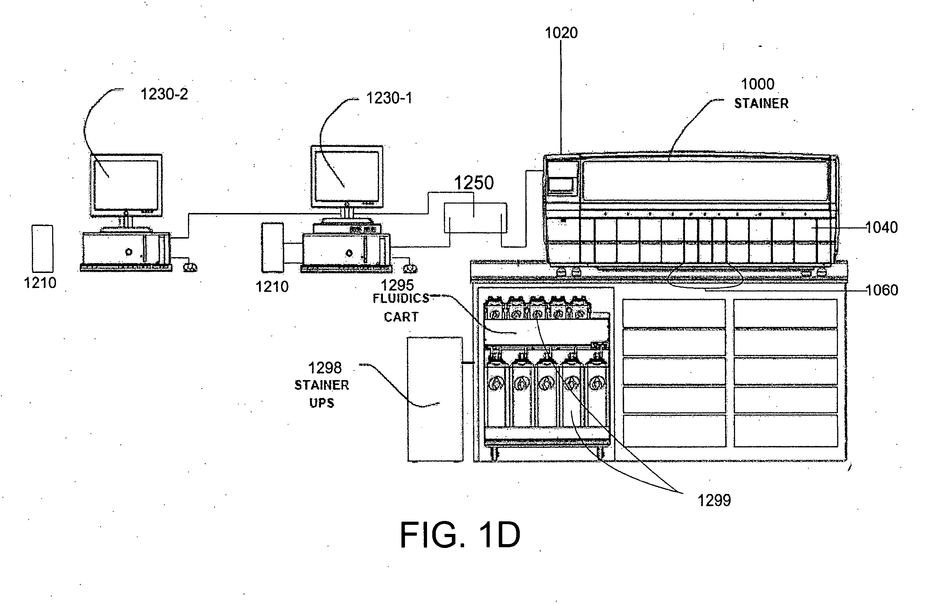

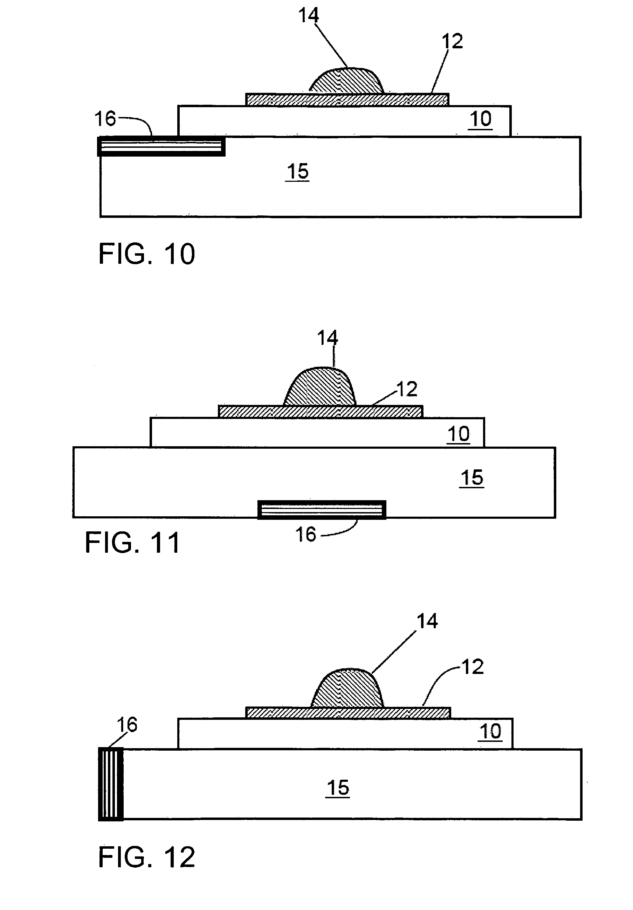

A presently preferred embodiment of automated sample processing system in which the deparaffinization/dewaxing, as described above, may be advantageously employed is illustrated in FIGS. 1 - 13 and is described below in details. Further aspects and details of this preferred automated sample processing system are provided in the following applications and international patent applications, each of which is incorporated by reference herein in its respective entirety: international patent application publication WO 2004/057307 A1, international patent application publication WO 2004/057308 A1, international patent application publication WO 2004/058950 A1, international patent application publication WO 2004/059287 A2, international patent application publication WO 2004/058404 A2, international patent application publication WO 2004/059284 A2, international patent application publication WO 2004/059288 A2, international patent application publication WO 2004/059441 A2, and international patent application publication WO 2004/059297 A1, provisional patent application 60/616,444 and United States patent application 11/177,730, and the United States patent applications US 11/229,098 and US 11/227,270.

FIG. 1A shows the top-view of an exemplary stainer 1000 for automatic pre-treatment and processing of biological samples. As shown in Fig. 1A, exemplary stainer 1000 includes slide drawers 1040 that contain slides 1045, which may contain biological samples needing treatment. In some embodiments, slides 1045 are mounted on individual holders hinged to slide rack handle 1070, which allow individual slides 1045 to be maneuvered to a horizontal or vertical position. In some embodiments, the slide rack handle 1070 may allow the slides 1045 to be tipped vertically or horizontally. In some embodiments, the slide rack 1065 may be placed in one of a plurality of slide drawers 1040, which is slid into stainer 1000. In some embodiments, processing tanks (not shown) may be present beneath the slides 1045. Some embodiments may comprise processing tanks, which may be temperature controlled. Processing tanks may be filled with fluid, drained, and/or flushed using fluids supplied by the fluidics component of fluidics, LAN, and power connections 1025. In some embodiments, slides 1045 may be immersed in the fluid present in a processing tank in accordance with some methods for the pretreatment of biological samples. In some embodiments, stainer 1000 also contains robot 1032.

As shown in FIG. 1B, exemplary robot head 1010 may include one or more of a probe 10, optical or electronic sensing device 25, syringe pump 1015, air nozzle 124, air cylinder 39 and slide tipping tool 38. In some embodiments, probe 10 may be used to aspirate a precise quantity of reagent from reagent bottle 1080 for application to slide 1045. (FIGS. 1A and 1B). In some embodiments, robot 1032 may be directed to reagent mixer 1050 so that reagents aspirated from reagent bottle 1080 by probe 10 may be mixed in reagent mixer 1050 to create new or custom reagents. In some embodiments, robot 1032 may be directed to probe wash station 1055 to permit probe 10 to be washed. Washing probe 10 prevents reagent contamination and residue build-up in probe 10. In some embodiments, the aspiration and release of reagents may be controlled by syringe pump 1015.

In some embodiments, probe 10 may be used to aspirate a precise quantity of a clearing solvent from clearing solvent source 1080 for application to slide 1045. In some embodiments, probe 10 may be used to aspirate a precise quantity of a washing solution from washing solution source 1045 for application to slide 1045. In some embodiments, the samples on the slides are rinsed with a clearing solvent and/or washed with a washing solution in accordance with a method for the pre-treatment of biological sample.

As schematically illustrated in FIG. 1B, the robotic head 1032 may also be provided with an air nozzle 124 for blowing air onto slide 1045 in order dry slide 1045 or to blow away liquid. Robot head 1010 may also include a variety of other components, including, but not limited to a slide tipping tool 38, for actuating slide rotation, that may be coupled to an air cylinder 39. In some embodiments, slide tipping tool 38 may operate on slide 1045 to tip the slides from a vertical to a horizontal position and vice versa.

In some embodiments, robot head 1010 may include an optical or electronic sensor 25, which may be moved to various positions within stainer 1000 through action of the robot 1032. In some embodiments, optical or electronic sensor 25 can include a camera, which may be a Charge Coupled Device ("CCD") camera. In some embodiments, the camera may be a high resolution camera capable of taking pictures of the samples on the slides at an appropriate magnification. In some embodiments, the captured image may be analyzed for reagent analysis or other analyses. In some embodiments, the camera may be used 1) as an area locator, 2) to locate a tissue area, or 3) to apply reagent based on location and area.

In some embodiments, the camera may be designed to detect the presence of embedding medium. In particular, the camera may be designed to detect the presence of paraffin traces using the change in the double refraction due to the presence or absence of paraffin.

Embodiments may comprise a feed-back mechanism by means of which information relating to the presence or non-presence of embedding medium may be used to determine the dewaxing efficiency. The information may also be used to decide if the dewaxing procedure is to be continued or stopped. The feed-back mechanism may for example communicate information to a stainer Applications Programming Interface ("API").

In some embodiments, data captured by electronic or optical sensor 25 may be associated with the location of robot 1032, and/or with the location of electronic or optical sensor 25, and/or with the location of slide 1045 or reagent bottle 1080.

In some embodiments, when a slide 1045 is in a horizontal position, a precise quantity of reagent, e.g. a clearing solvent, may be applied to slide 1045 using a probe 10 and syringe pump 1015 mounted on robot 1032. In some embodiments, a separate conduit may be used to apply a buffer to slide 1045 in a horizontal position. Robot 1032 is capable of moving in two-dimensions using X axis mechanism 1035 and Y axis mechanism 1030. The movement and positions of robot 1032 may be tracked. Additionally, in some embodiments a docking or homing station with a known reference position may be provided for robot 1032. Robot 1032 may dock or be commanded to dock at the homing station when it is idle, prior to tracking its movements, for calibration purposes, and/or to prevent, correct, and minimize tracking errors. Robot 1032 also contains a Z head 1010 that is capable of being moved in the Z (vertical) dimension (perpendicular to the page). In some embodiments, the movement of robot 1032 and timing of reagent application or clearing solvent application or washing solution application may be controlled by a scheduler (not shown in FIG. 1A) that coordinates the movement of robot 1032 and reagent, solvent and buffer application based on treatment protocol constraints.

In some embodiments, a plurality of reagent racks 1060 hold individual labeled reagent bottles 1080, which may be both humanly and electronically readable to identify the contents of reagent bottles 1080. In some embodiments, the identifiers may take the form of an Infoglyph^{™} and may be read using a camera or other sensing apparatus 25 mounted beneath Z head 1010. In some embodiments, slides 1045 may also be labeled with identifiers, including an Infoglyph^{™}, which may contain information about the slide. Other systems for reading information, for example transponders, radio frequency identification ("RFID") receivers, magnetic readers, optical character recognition ("OCR") techniques etc. may also be utilized.

Reagents may be aspirated from reagent bottles 1080 using syringe pump 1015 and probe 10, then mixed with other reagents using reagent mixer 1050, if specified by the protocol, before being applied to the slides 1045. In some embodiments, the quantity of reagent, clearing solvent or washing solution applied to a slide 1045 may be controlled precisely by controls operating on syringe pump 1015. In some embodiments, syringe pump hardware 1015 may be motor driven, so that rotating the motor in a forward direction causes fluid to be aspirated into the syringe, and rotating the motor in a reverse direction drives the fluid back out of the syringe. In some embodiments, commands to syringe pump 1015 to aspirate and/or dispense fluid may be driven by a configuration table, which details the steps that syringe pump 1032 follows to perform the task at hand.

In some embodiments, sensors (not shown) may be present in or introduced into reagent bottles 1080 to detect the level of reagent remaining in reagent bottle 1080. In some embodiments, an operator may be alerted if a reagent level falls below a certain threshold. In some embodiments, reagent mixer 1050 may be capable of mixing a wide variety of reagents including mixing small and large volumes of reagents, mixing reagents with different viscosities and densities, and mixing nearly immiscible reagents. In some embodiments, gases formed during the mixing process are allowed to escape through exhaust 1075. Probe wash station 1055 allows probe 10 to be washed to remove any residues, to prevent residue build-up, and to prevent contamination of reagents and samples.

In some embodiments, stainer 1000 may also include fluidics, Local Area Network ("LAN") and power connections 1025, which includes controls and connections for fluidics, for networking and for power. As shown in FIG. 1D, some embodiments of stainer 1000 may include a fluidics subsystem with a fluidics cart 1295 with labeled electronically readable containers 1299 that store bulk fluids such as for example, slide buffers, fluids for flushing conduits, probe cleaning fluids, deionized water etc. In some embodiments, fluids may be delivered to locations, such as processing tanks, within stainer 1000 at appropriate points in time using conduits (not shown) from fluid containers 1299 on fluidics cart 1295. In some embodiments, multiple conduits may be provided for fluid delivery and the conduits allocated to fluids, based on resource allocation and scheduling algorithms in accordance with treatment protocol-related constraints. In some embodiments, fluids drained from stainer 1000 may be held in a separate labeled fluidics container 1299 in fluidics cart 1295 for bio-hazardous material.

Some embodiments of the invention may also provide LAN connections to allow stainer 1000 to communicate with other devices, including remote devices, other stainers, other laboratory instruments, laboratory and third party information systems, and computers within LAN 1223. LAN connections 1025 allow stainer 1000 to send and receive status information including information about slides 1045, process-status, treatment protocols, reagents, fluids, diagnostics, and other information that may be requested by remote users. In some embodiments, a touch-control panel 1020 may be provided to allow users to interact directly with stainer 1000. Touch control panel 1020 may provide a GUI along with menu screens and help screens to facilitate user-interaction and control of stainer 1000. Additionally, in some embodiments, stainer 1000 may also include an embedded computing system with processors, memory, hard drives, graphics and other electronic sub-systems (not shown) that allow software, firmware, and other program code to be run and executed on stainer 1000.

Fig. 1C illustrates an exemplary system 1200 for the automatic pre-treatment of biological samples. Fig. 1D also shows an exemplary system for automatic pretreatment of biological samples. A description of embodiments of a system for the automatic pretreatment of biological samples will now be made with reference to Figs. 1C and 1D.

As shown in Fig. 1C, exemplary system 1200 can consist of one or more stainers 1000, such as exemplary stainer 1000-1 and 1000-2 with coupled bulk fluid carts 1295 containing bulk fluids used by the stainers. In some embodiments, additional stainers may be added to exemplary system 1200 as shown by the dashed line depicted in Fig. 1C between stainers 1000-1 and 1000-2. As shown in Fig. 1D, each stainer 1000 makes use of a number of bulk fluids to perform the pretreatment and staining tasks. In some embodiments, these fluids can be stored externally in containers 1299 in fluid cart 1295. In some embodiments, a fluid level sensor may be provided with each fluid container 1299 on a fluidics cart 1295 and read periodically by the coupled stainer 1000. In some embodiments, power may be supplied to each stainer 1000 through an Uninterruptible Power System (UPS) 1298, which may also be monitored by its coupled stainer 1000 to detect power-line fluctuations, or an impending loss of power.

In some embodiments, the stainers, such as exemplary stainers 1000-1 and 1000-2 may be networked in LAN 1223 and may communicate with other system components using network hub 1250. In some embodiments, stainers 1000 may contain embedded computing systems that allow software, firmware, and other program code to be stored, updated, compiled, and executed on the stainer. In some embodiments these programs may be able to interact and exchange data and control information with programs running on computing devices 1230-1 and 1230-2. In some embodiments, information may be exchanged between computing device 1230-1 and laboratory devices 1296 and 1297. In some embodiments, data may also be exchanged between laboratory devices 1296 and 1297 and database 1220.

Network hub 1250 may also provide a network connection to a Wide Area Network ("WAN") 1270 through network bridge 1260. In some embodiments, WAN 1270 can be the Internet. In some embodiments, the network connection to network hub 1250 may be wireless. In some embodiments, the wireless networking function may allow network hub 1250 to support the IEEE 802.11b and/or IEEE 802.11g and/or other wireless networking protocols, and serve as a Wireless Access Point (WAP). In some embodiments, communication between the stainers 1000 and/or with remote users 1280 through WAN 1270 may also occur using standard communications protocols such as TCP/IP, or any other communications protocol. In some embodiments, a remote user or remote device 1280 may query or communicate with any stainer 1000 through WAN 1270. In some embodiments, communication between stainers 1000 and/or communication over WAN 1270 may be encrypted.

In some embodiments of system 1200, stainers 1000 may also be coupled to one or more computing devices 1230 containing removable media drives capable of reading removable media 1240. Removable media 1240 may be a floppy disk, CD-ROM, DVD-ROM, DVD+RW, DVD-RW, or any other computer readable media. In some embodiments, computing devices 1230 may contain network and communication ports including, but not limited to, USB, Ethernet, Serial, and/or Parallel ports to allow communication with stainers 1000 and WAN 1270 through network hub 1250 and/or network bridge 1260 using appropriate communication devices, methodologies, and communication protocols. In some embodiments, computing device 1230 may also contain one or more of processors, memory, hard disks, graphics cards, and display and data entry devices. Examples of computing device 1230 include PCs, Workstations, Laptops, Handhelds, or any other mobile computing devices capable of being used in system 1200.

In some embodiments, computing device 1230-1 may be able to run software, such as a server, that coordinates the actions of the individual stainers 1000, obtains status of stainers 1000, and obtains and updates slide and process related information. Computing device 1230-1 may also be coupled to printer 1210-1 and database 1220. In some embodiments, database 1220 may contain system related information including stainer, patient, slide, treatment protocol, fluid and/or reagent related information. In some embodiments, computing device 1230-1 may query stainers 1000-1 and/or 1000-2 for status or other information and update database 1220. In some embodiments, a system log such as system log 1160 may be generated by stainers 1000-1 and 1000-2 and stored in database 1220. In some embodiments, printer 1210-1 coupled to computing device 1230-1 may also be used to print reports generated by computing device 1230-1. In some embodiments, stainer 1000 may back-up stainer, process and slide related information on storage media on computing device 1230-1.

In some embodiments, computing device 1230-2 may run software to allow users to enter data related to system 1200 into database 1220. In some embodiments, software running on computing device 1220-2 may allow users to configure and manage stainers 1000-1 and 1000-2. In some embodiments, users may enter data including identification data for slides 1045, reagent bottles 1080, and bulk fluid containers 1299 using software running on computing device 1230-2. In some embodiments, printer 1210-2 coupled to computing device 1220-2 may be used to print the slide, bulk fluid container, and/or reagent container labels.

In some embodiments, portions of programs or data related to the control and/or monitoring of stainers 1000 may reside on removable drive 1240. In some embodiments, programs running on computing device 1230-2 may provide stainer, slide, and process related information to users using an appropriate GUI. In some embodiments, users may be able to control the actions of one or more of stainers 1000 using programs running on computing device 1230-2.

In some embodiments, computing device 1230-3 may also run other laboratory information systems (LIS) 1222. LIS 1222 may use, store, and update data in database 1221 and also request information from stainer related applications running on computing device 1230-1 or from the stainers 1000 directly. In some embodiments, LIS 1222 running on computing device 1230-3 may store patient records and other lab related data. In some embodiments, a user may import patient data and slide orders into the System Manager from LIS 1222 through an intermediate interface called an "LIS Agent." In some embodiments, the LIS Agent may facilitate the exchange of data between the stainer 1000 and related software systems, software running on computing devices 1230-1 and 1230-2, and database 1220, on one hand and LIS 1222, on the other hand. In some embodiments, the LIS Agent may include software that provides a bidirectional interface to receive and send data to other software such as software running on stainers 1000, computing devices 1230, or laboratory devices 1296 or 1297. In some embodiments software running on computing device 1230-1 could include the LIS Agent as a module.

For example, information about reagent, clearing solvent and/or bulk fluid usage could be analyzed by software running on computing device 1230-1 or 1230-2 and supplies ordered using LIS 1222 through the LIS Agent whenever the inventory level falls below a certain threshold. In some embodiments, re-ordering of supplies through LIS Agent may take place according to a prearranged subscription plan. In some embodiments, software running on computing device 1230-1 or 1230-2 may track diagnostic messages and/or error codes from stainers 1000 and automatically schedule service through the LIS Agent. In some embodiments, software running on computing device 1230-1 or 1230-2 may use stainer and slide related information to perform accounting functions, including the generation of invoices and reports. In some embodiments, software running on computing device 1230-1 or 1230-2 may use stainer and slide related information stored in database 1220 to generate cost and usage statistics relating to the operation of the stainers. In some embodiments, invoices and reports generated by software running on computing device 1230-1 or 1230-2 may be sent to LIS 1222 through the LIS agent. It should be noted that system 1200 is exemplary only and additional stainers, computers, lab devices, and other components may be added to the system in order to perform methods and achieve objects and functionality of the system.

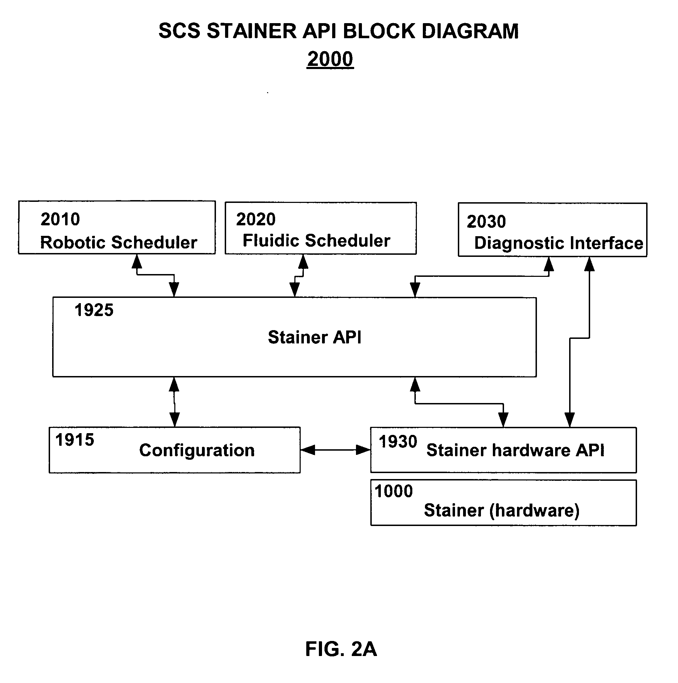

FIG. 2A shows the interactions of an exemplary Stainer Applications Programming Interface ("API") 2000 for control of functions of stainer 1000. In some embodiments, stainer API 1925 provides a high-level system control and monitoring interface to perform operations for slide processing and pretreatment. In some embodiments, stainer API 1925 may serve as an interface for robotic scheduler 2010 and fluidic scheduler 2020 to invoke and exchange information with routines in diagnostic interface 2030.

In some embodiments, stainer API module 1925 provides a mechanism to access diagnostic interface 2030, which may be part of communications module (not shown). Diagnostic interface 2030 facilitates access to hardware on stainer 1000, where machine and component status can be queried and various commands related to diagnostics executed. In some embodiments, diagnostic interface 2030 may exchange data and control information with support module (not shown) to facilitate remote monitoring, diagnosis, and support of functions and operations of stainer 1000.

Robotic scheduler 2010 and fluidic scheduler 2020 work through stainer API 1925, which also handles all interfaces to the low level devices through stainer hardware API 1930. For example, in some embodiments, robotic scheduler 2010 may look ahead to determine the robotic head's next rendezvous (the location and point in time where the robotic head 1032 may be utilized next) and may elect to park the robotic head 1032 close to that location by issuing an appropriate command through stainer API 1925.

In some embodiments stainer API 1925 provides access to several routines and functions that are useful for operations relating to the processing and pretreatment of slides 1045. Some of these routines may invoke other routines provided by stainer hardware API 1930. In some embodiments, stainer API 1925 may provide an image acquisition and glyph decoding routine to detect the slides 1045 and decode information on the slides 1045. The image acquisition and glyph decoding routine causes glyphs on labels affixed to slides 1045 or reagents to be read and decoded. In some embodiments, data read from the labels may be sent to SMS 1320 along with slide or reagent location information, and an appropriate slide or reagent record in database 1220 may be updated. In some embodiments, image acquisition and glyph decoding routine may cause a picture of the slide 1045 to be taken by a camera under Z Head 1010, and the image may be stored as part of the slide or reagent record. In some embodiments, the image taken by the camera may be processed using image processing routines to extract information from the glyph, or to determine if a slide or reagent is present.

In some embodiments, stainer API 1925 may also provide access to routines to control and stabilize the temperature of a slide 1045 during staining, and to control the temperature of reagent containers in reagent racks. In some embodiments, slides 1045 are tipped vertically to enter the pre-treatment processing tank. Embodiments of stainer API 1925 may provide a routine to tip slides 1045 to a vertical position. Embodiments of stainer API 1925 may also provide access to routines for filling, emptying, and heating processing tanks associated with each slide drawer 1040.

In some embodiments stainer API 1925 may also provide access to routines to air blow a slide, or to rinse slides 1045 with reagents, e.g. clearing solvents, buffers or water. Routines accessed through stainer API 1925 may themselves invoke other routines. For example, a slide rinse routine may invoke functions to move the robot to a start rinse position over a particular slide; activate the rinse tool and water pump; move the robot to an end rinse position; and retract the rinse tool. In some embodiments, a buffer rinse allows slide samples to be overlaid with a buffer, which prevents sample deterioration or degradation. In some embodiments, a buffer rinse may be used on slides 1045 between pretreatment and staining, or when a reagent is unavailable, or when the reagent cannot be applied to the slide 1045 within the time allotted by a treatment protocol. Applying buffer to a slide sample preserves the sample until resources such as a reagent or robot 1032 for the next operation are available.

Stainer API 1925 may also provide access to reagent aspiration and dispense routines, wherein a specified amount of reagent may be aspirated from a reagent bottle or the system mixer into probe 10. In some embodiments, robotic scheduler 2010 may be presented with a series of slide dispense tasks, which it prioritizes and sorts. Robotic Scheduler 2010 may then access the reagent aspiration and dispense routine through stainer API 1925 to perform the specified aspiration and to dispense the specified reagent amount from probe 10 onto a slide 1045 or into the system mixer. In some embodiments, the reagent aspiration and dispense routine may in turn call an on-demand reagent mixing routine, which allows a reagent to be created on demand by mixing its constituent reagents in a system mixer. In some embodiments, after the reagent has been mixed, aspirated, and dispensed, the reagent aspiration and dispense routine may cause the mixer to be rinsed, emptied, and dried.

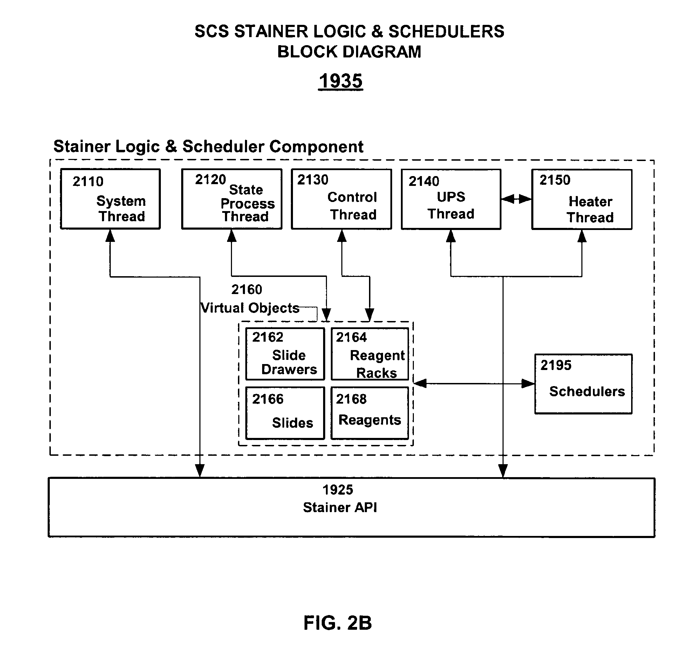

Fig. 2B shows a block diagram of exemplary stainer logic and schedulers module 1935 for control of stainer program threads. The various exemplary threads operate on objects including slide drawers object 2162, reagent racks object 2164, slides object 2166, and reagents object 2168. It should be noted that the program threads shown are exemplary only and that other program threads may be added or the program thread structure and logic modified according to some embodiments of the present invention.

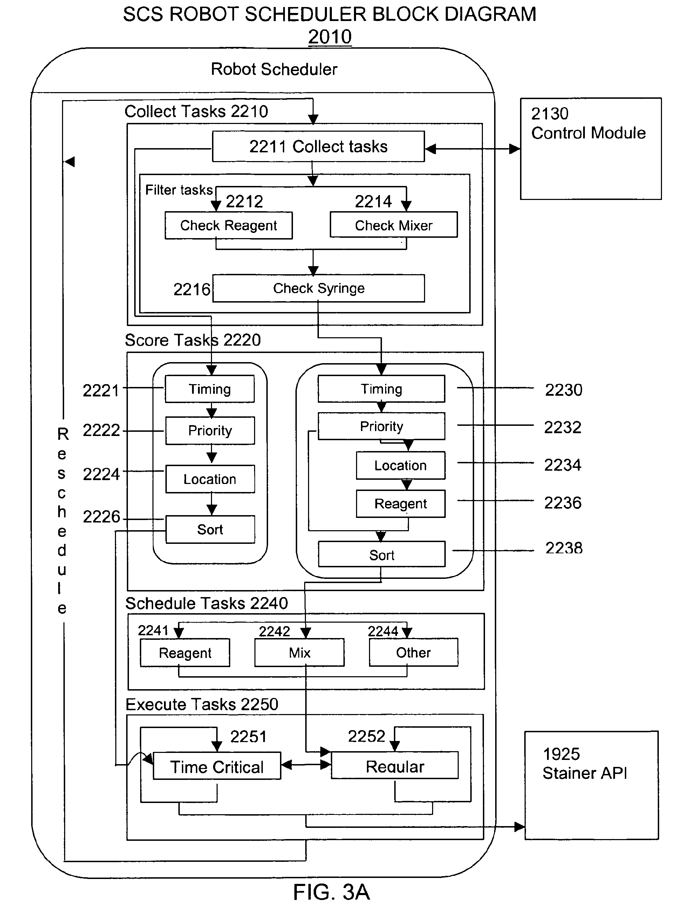

Fig. 3A shows a block diagram showing interactions between components of an exemplary robot scheduler 2010. The Stainer Control Software SCS schedulers, including robotic scheduler 2010 and fluidics scheduler 2020, are responsible for conducting staining (robot) operations and pre-treatment (fluidics) operations on stainer 1000. In some embodiments, robot scheduler 2010 may use a dynamic algorithm that continually readjusts the processing tasks that are executed, based on system changes, user actions, and a continuous feedback loop. Embodiments of fluidics scheduler 2020 may also use a dynamic algorithm capable of continually monitoring system changes and scheduling new pretreatment tasks as they are requested. Features provided by the dynamic, self-adjusting scheduling algorithm facilitate continuous workflow. In some embodiments, robotic scheduler 2010 and fluidic scheduler 2020 are instantiated as autonomous threads on stainer 1000 startup and continuously operate to control actions of stainer 1000.

As used herein, "continuous workflow" is defined as allowing substantially continuous usage and/or processing of biological samples including the use of reagents. For example, continuous workflow includes high availability of samples or empty sample holders or reagents or empty reagent holders or fluids for addition or removal of at least one of these without substantially interrupting the processing and/or integrity of other samples. For example, a sample being processed or waiting for processing or completed may be available to a user on an ongoing basis without, for example, disrupting the integrity of samples in the apparatus or sample processing protocols. Substantially, as used in this context, refers to not damaging the sample or leading to an invalidated protocol. For example, substantially continuous usage includes the application of a buffer to keep sample integrity while executing other tasks. Another embodiment of continuous workflow is the ability to continue to process at least one sample or keep the integrity of a sample or protocol when the apparatus suffers at least one mechanical, electrical or software malfunction. A further embodiment of continuous workflow is the timely transmission or submission of data to a user or another element of the apparatus or apparatus network that facilitates the integrity of a sample or conformance to a protocol of the processing of a sample.

In some embodiments, robot scheduler 2010 manages the coordination of robot 1032 actions, including aspiration and mixing of reagents, for the staining of each slide 1045 within the dynamic environment in stainer 1000. Robot scheduler 2010 analyzes impending steps for each slide, as defined by the treatment protocol for the slide, then intersperses the steps across all slides 1045 and scores (prioritizes) them. In some embodiments, stainer 1000 may contain multiple slide drawers, each of which can contain several slides 1045, and each of these slides 1045 may have its own individual treatment protocol necessitating an individually tailored pretreatment and/or reagent application schedule. From the viewpoint of robotic scheduler 2010 actions are performed on each of the slides 1045 in stainer 1000 within a specified period of time, and in a specific sequence.

In some embodiments, robot scheduler 2010 ensures that robot 1032 has enough time to rinse probe 10, aspirate and/or mix reagents, travel to the location of a slide 1045, and apply the reagent to slide 1045. This sequence of tasks is repeatedly performed for each slide 1045 present in the stainer. Robot scheduler 2010 therefore looks ahead in time for a certain period, and prioritizes or scores tasks that are performed in that period. If robot scheduler 2010 determines that a task may be performed at a later time, the task may be pushed down and re-scored during the next period. In some embodiments, robot scheduler 2010 can work on the highest scored task first and then proceed to other tasks in order of priority. In some embodiments, the highest scored task may be the most time critical task. In some embodiments, if robot scheduler 2010 determines that robot 1032 does not have sufficient time to aspirate and apply reagent to a slide 1045, a buffer may be applied to slide 1045 to preserve the sample and the task marked to be re-scored during the next period.

In some embodiments, the speed at which robot 1032 can perform actions and number of slide slots provided in stainer 1000 are matched to ensure that the spoiling of slide samples on account of treatment protocol violations is extremely rare or non-existent. In the unlikely event that robot 1032 is unable to perform its actions within the specified period or incubation tolerance for a treatment protocol step (for example, due to a transient mechanical problem), the violation is logged, but processing of slides 1045 is continued. When the processing of slides 1045 in a slide rack 1065 containing spoiled slide 1045 has been completed, a qualified technician can review the log to determine the nature and seriousness of the treatment protocol step tolerance violation, and also view the resulting stained sample to determine if the results are acceptable.

In some embodiments, robot scheduler 2010 can continually monitor all system events and re-adjust schedules in response to any changing events to allow all slides 1045 to complete properly. In some embodiments, scoring and scheduling may be performed in accordance with algorithms described below. In some embodiments, robot scheduler 2010 and fluidics scheduler 2020 may operate to maximize throughput of stainer 1000, as measured by the total number of slides 1045 successfully processed in a given period of time. In some embodiments, robot scheduler 2010 may recompute schedules to respond to dynamic changes in the load of stainer 1000 such as may occur when new slide racks are loaded and rack priorities are changed. In some embodiments, robot scheduler 2010 may handle expected and unexpected failures and errors by trying to isolate affected subsystems and save slides 1045 from spoiling.

As shown in Fig. 3A, embodiments of robotic scheduler 2010 may include collect tasks module 2210, score tasks module 2220, schedule tasks module 2240, and execute tasks module 2250. In some embodiments, collect task module 2210 interfaces with control thread 2130 to obtain a list of all pending robot tasks. Robot tasks include all tasks that utilize robot 1032 or tools associated with the robot, such as reading a reagent label using the camera, tipping a slide, or dispensing reagent on a slide 1045 using syringe pump 1015 and probe 10. In some embodiments, tasks that are to be performed within the next time interval are identified and collected while all the others are filtered out.

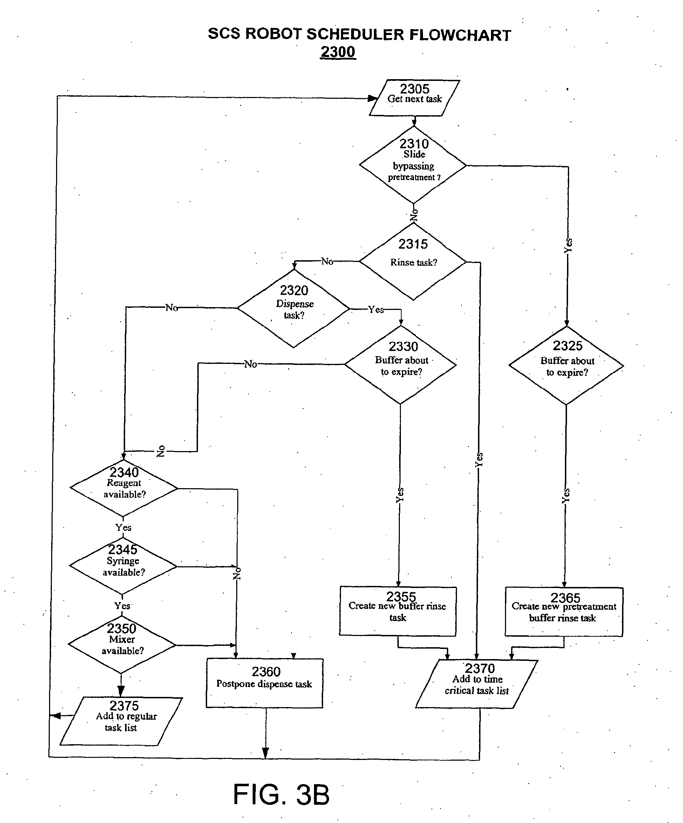

Fig. 3B shows a flowchart of an exemplary method for determining regular and time-critical task lists. As shown in Fig. 3B, the algorithm loops continuously and the next task is processed in step 2305. In step 2310, the task is examined to check whether it pertains to a slide 1045 bypassing pre-treatment. In step 2325, the task may be further examined to check whether it pertains to a buffer about to expire and, if this is the case, then a new buffer rinse task is created in step 2365 and the buffer rinse task is classified as time-critical in step 2370. If the task is not a slide 1045 bypassing pretreatment then it is examined in step 2315 to determine if it is a rinse task. If the task is a rinse task then is classified as time-critical in step 2370.

In some embodiments, if the task is not a rinse task, then in step 2320 it is examined to determine whether it is a dispense task. If in step 2330, the dispense task is determined to relate to a sample whose buffer is about to expire and for which reagent may not be applied in time then, in step 2355 a new buffer rinse task is created and the buffer rinse task is classified as time-critical in step 2370. If the dispense task does not pertain to a sample whose buffer is about to expire then reagent availability is determined in step 2340, followed by syringe 1015 availability in step 2345 and mixer 1050 availability in step 2350. If all of these objects are available (or, if the mixer 1050 is not used by the task) then the task is added to the regular task list in step 2375. If any of the objects is unavailable then the task is postponed, in step 2360. Once a task has been processed, the algorithm returns to step 2305 to process the next task on the sorted list.

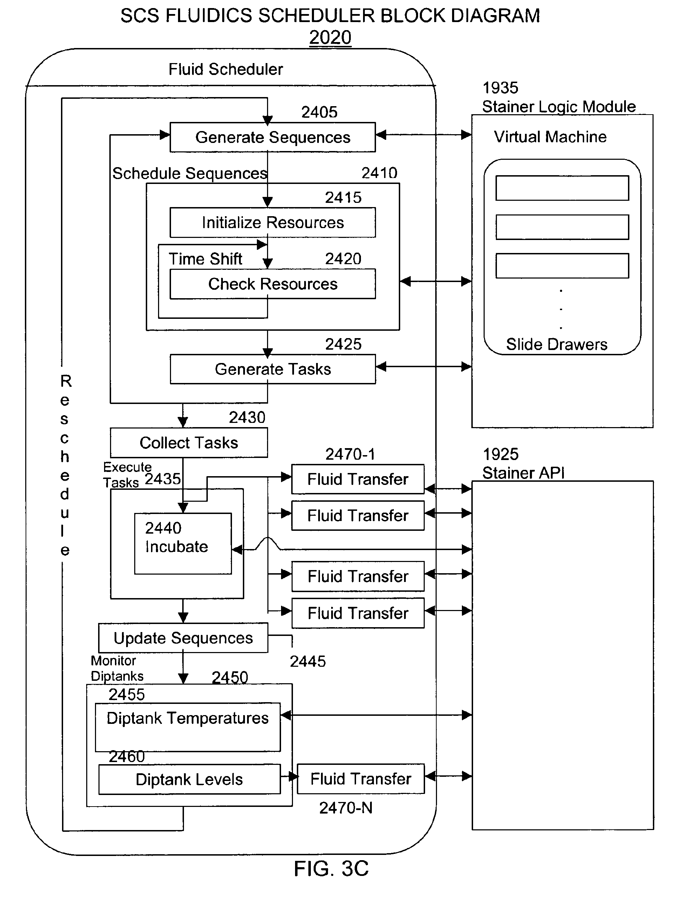

Fig. 3C shows a block diagram of an exemplary Fluidics Scheduler 2020. In some embodiments, fluidics scheduler 2020 may be an autonomous process and implemented as one or more threads, which run in a continuous loop within the context of SCS 1310. In some embodiments, a fluidics scheduler thread may run independently but may query other components for the data to create schedules and to coordinate task execution related to the schedules. In some embodiments, stainer 1000 may have a limited set of conduits to convey fluids to and from the bulk fluids cart, or to remove waste from the stainer. Additionally, conduits and chambers within stainer 1000 may be periodically flushed to ensure that there is no reagent or fluid cross-contamination. Embodiments of fluidics scheduler 2020 operate to ensure that the conduits are available to fluids in a manner that ensures that fluids can be delivered to or removed from appropriate locations in stainer 1000 at appropriate points in time. Fluidics scheduler 2020 allows the time-sharing of conduit resources to facilitate various operations performed by stainer 1000.

In some embodiments, the fluidics subsystem may have multiple conduits each of which may be controlled by multiple individual valves and pumps. Accordingly, fluidics scheduler may create and implement schedules permitting multiple actions to be taken in parallel, such as directing fluids along different fluid paths simultaneously. In some embodiments, individual control systems associated with the conduits may be inherently parallel. For example, a valve may stop the flow of fluid in one conduit, while another conduit is simultaneously removing waste fluid from the stainer. Therefore, in some embodiments, fluidics scheduler 2020 may direct the execution of individual actions by coordinating a dynamic collection of autonomous threads, each responsible for executing distinct individual tasks.

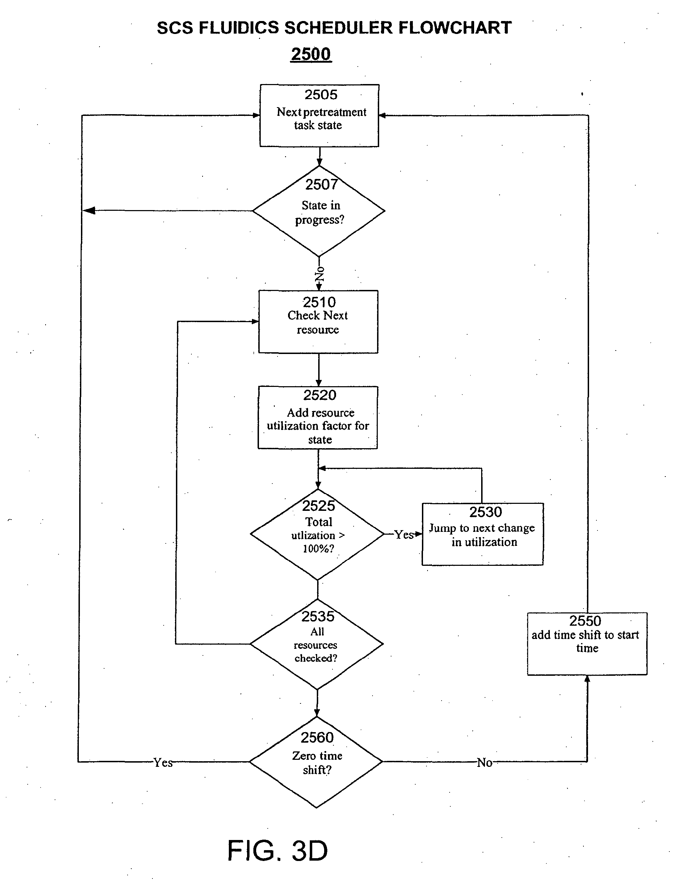

Fig. 3D shows a flowchart 2500 of an exemplary algorithm for scheduling and allocating resources for fluidics scheduler 2020. In some embodiments, task pretreatment states are checked in step 2505. States that have already been performed or that are currently in progress are skipped. If a task pretreatment state indicates that the task is not in progress, then each shared resource requested by that task is checked iteratively. The proportion of the next resource used by the task is calculated in step 2510 and added to the utilization factor of the resource in step 2520. If the utilization factor now exceeds 100% in step 2525, then in step 2530 the allocation of the resource is re-scheduled for the next point in time at which the resource utilization factor changes. Steps 2525 and 2530 are repeated until the allocation of the resource can be scheduled without conflict according to some embodiments of the algorithm.
If the resource has been scheduled without conflict then steps 2510 through 2535 are repeated until all resources have been allocated. If the allocation of the resources has not caused a time shift in the original start time of the task then the algorithm returns to step 2505 to process the next task. If a time shift to task start time has occurred as a result of resource conflicts, then in step 2550 the task start time is updated to reflect the time shift and the algorithm returns to step 2505 to process the next task.

In some embodiments, a vibration means is configured to introduce vibrations of the sample and reagents, e.g. clearing solvents, or probes during a processing step, whereby the processing time needed to accomplish a specific processing step may be reduced considerably for a number of processing steps. Reducing processing time is an appreciated advantage in many applications. Providing vibrations during the washing step or the deparaffinization step, for example, may reduce a processing time of e.g. about 5-10 minutes to about 1 - 3 minutes. For a possible antibody and visualization step, the vibration appears to improve the process, providing a better signal. By using vibrations during a hybridization step, this step may be shorter and the undesired drying will be diminished.

In some embodiments, the vibration means is embedded in an element arranged in the automated sample processing system, which element is arranged to become in a supporting contact with a slide. In another embodiment, the vibration means is embedded in an element arranged to cover a sample on a slide.

In some embodiments, the vibrator means is a piezo electric element or a laser actuated element, configured to contact an edge of a slide or a surface of the slide to cause vibrations.

In some embodiments, the vibration means is configured to emit acoustic waves, e.g. surface acoustic waves ("SAW"). The vibration means may for example be configured to emit acoustic waves of a wave length adapted to at least one sample process that is assisted by the waves. According to embodiments, the vibrator is configured to emit acoustic waves of a wave length smaller than or of approximately the same size as the sample carrier and more preferably, smaller than or of approximately the same size as the sample to be processed.

In some embodiments, vibrations are generated by a tapping robotic arm or by an electric vibrator.

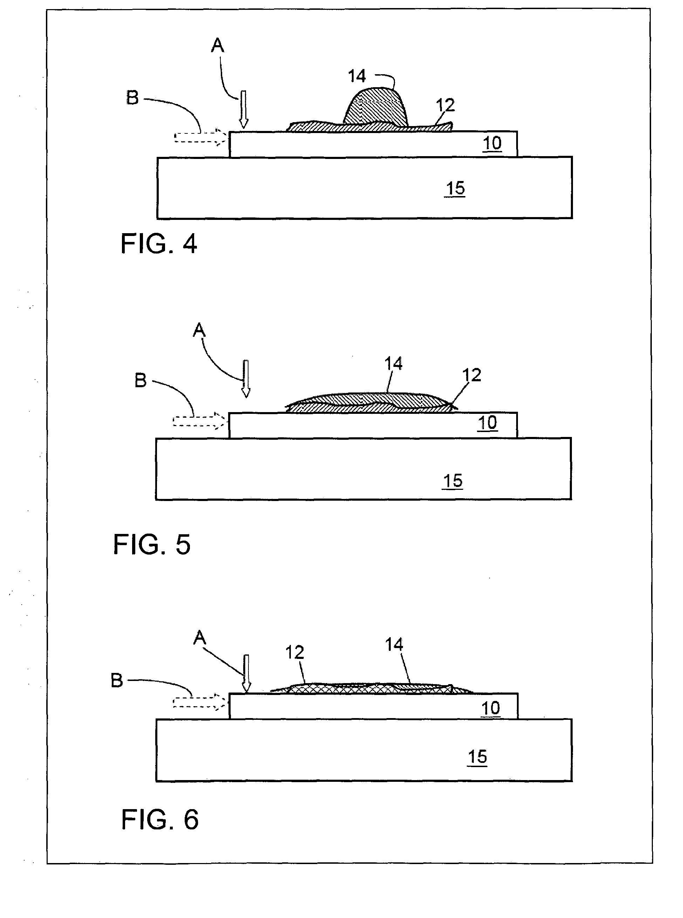

Each of FIGS. 4-13 shows a microscope slide with a biological sample to be processed and one of a number of various positions for a vibrator element generating a vibrating movement.

FIG. 4 schematically shows one embodiment of an arrangement of a carrier 10 (corresponding to slide 1045 in FIG. 1A), such as a microscope slide and a sample 12 on the carrier 10 in close contact with a support 15. A droplet 14 of a reagent or a clearing solvent is applied to the sample. In FIG. 5, the reagent 14 has spread over most of the sample, and in FIG. 6 most of the reagent has mixed with or is absorbed by the sample. The process indicated in the FIGS. 4-6 may be accomplished in many ways.

In some embodiments, the sample is vibrated in a short period such as a few seconds or minutes, depending on the properties of the sample and the reagent or the probe that has to be added to the sample. More specifically, the viscosity of the reagent has a great influence on the time needed to obtain the desired reactions. By vibrating the reagent or any other substance, which has to be added to the sample, the assay time may be considerably reduced. Further experience has proven that several other benefits may be obtained, such as higher sensitivity and better reproducibility. These advantages are possibly due to a more homogeneous mixture of sample and reagent that is accomplished through the vibration of the sample and reagent.

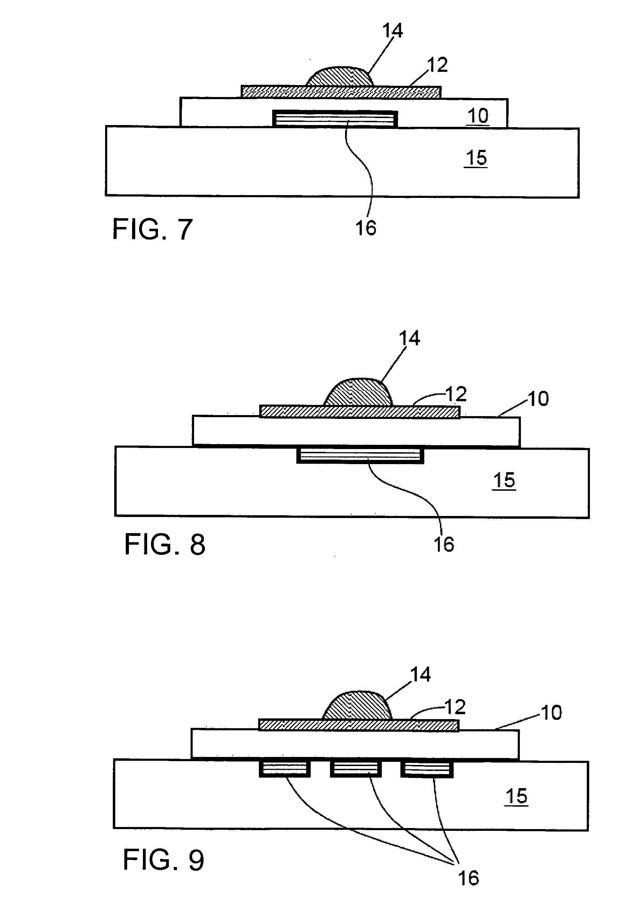

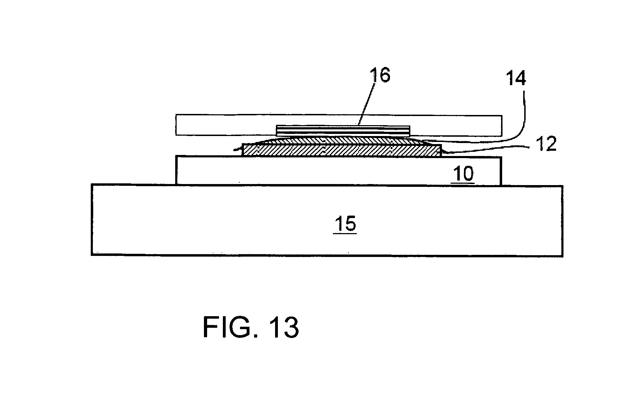

The vibrations may be generated in several ways. Two such ways of generating vibrations are: (1) by use of a robotic arm, tapping, e.g. knocking lightly, on the top of a slide, as indicated by the solid arrow A and (2) by the use of a robotic arm, tapping, e.g. knocking lightly on the edge of a slide, as indicated by the dashed arrow B. The vibrations may be produced by at least one embedded vibrator element 16, such as a piezo crystal in carrier 10 as shown in FIG. 7, or in the support 15, as shown in FIGS. 8-12, or in a cover above the sample, as shown in FIG. 13. It may be advantageous to incorporate three such vibrator elements 16 as shown in FIG. 9.

The vibrator elements 16 illustrated in FIGS. 7-12 may be connected through conducting wires (not shown) to a power supply such that the power supply is controlled from the control system providing control of all processing in the automated sample processing system. More specifically, the vibrations applied to any sample during a processing are, preferably, controlled according to the processing protocol for that specific sample. Thereby, it is ensured that each of the samples is processed specifically as requested.

According to embodiments, the vibrator element(s) 16 (cf. FIG. 1A, FIGS. 7-13) may be incorporated into an automated sample processing system 1000 comprising a plurality of positions for sample carriers 10, 1045. Such systems may have the sample carriers arranged in a slide rack 1065 or on a carousel (not shown). Other, alternative systems (not shown) may comprise a plurality of separate positions arranged in a compact rotary symmetric unit comprising several levels (floors) of positions enclosing or adjacent to a neighboring transport means that is able to elevate and insert a sample carrier to a specified position on a specified level by a translational movement.

An improved method and apparatus for pre-treatment and processing of embedded biological samples have been disclosed and described according to some preferred exemplary embodiments. Those skilled in the art can now appreciate, from the foregoing description, that the broad techniques of the embodiments of the present invention can be implemented in a variety of forms. Therefore, while the embodiments of this invention have been described in connection with particular examples thereof, the true scope of the embodiments of the present invention should not be so limited since many variations and equivalents of the method and the apparatus may be carried out without departing from the scope of the invention.

Further, methods described herein according to embodiments of the invention may conveniently be implemented using program modules, hardware modules, or a combination of program and hardware modules. Such modules, when executed, may perform the steps and features disclosed herein, including those disclosed with reference to the exemplary flow charts shown in the figures. The operations, stages, and procedures described above and illustrated in the accompanying drawings are sufficiently disclosed to permit one of ordinary skill in the art to practice the invention. Moreover, there are many computing elements, programming languages and tools, and operating systems that may be used in practicing embodiments of the instant invention and, therefore, no detailed computer program could be provided that would be applicable to these many different systems. Each user of a particular system will be aware of the language, hardware, and tools that which are most useful for that user's needs and purposes.

The above-noted features and aspects of the present invention may be implemented in various environments. Such environments and related applications may be specially constructed for performing the various processes and operations of the invention, or they may include a general-purpose system or computing platform selectively activated or reconfigured by program code to provide the functionality.

Embodiments of the present invention also relate to computer readable media that include program instructions or program code for performing various computer-implemented operations based on the methods and processes of embodiments of the invention. The program instructions may be those specially designed and constructed for the purposes of the invention, or they may be of the kind well known and available to those having skill in the computer software arts. Examples of program instructions include, for example, machine code, such as produced by a compiler, and files containing a high-level code that can be executed by the computer using an interpreter.

Other embodiments of the invention will be apparent to those skilled in the art from consideration of the specification and practice of the embodiments of the invention disclosed herein. It is intended that the specification and examples be considered as exemplary only, with a true scope and spirit of the invention being indicated by the following claims. As such, the invention is limited only by the following claims.

## Claims

1. A method for automated removal of an embedding medium from an embedded biological sample, the method comprising the steps of:
- providing an automated sample processing system having an automated process operation capability that causes automated process operation events through robotic sample process functions;
- providing a clearing solvent, e.g. an organic solvent, capable of lowering the melting point of an embedding medium and/or dissolving an embedding medium;
- loading a plurality of sample holders with embedded biological samples in the automated sample processing system;
- exposing an embedded biological sample to the clearing solvent, whereby the embedding medium is liquefied; and
- providing a washing solution capable of removing the clearing solvent and the liquefied embedded medium from said biological sample, said clearing solvent and said washing solution being immiscible.

2. A method according to claim 1, wherein the clearing solvent is selected from the group comprising: hydrogenated naphthalene, naphthenic hydrocarbons, d-Limonenes, paraffinic/isoparaffinic hydrocarbons, paraffinic-glycol etheter, or alkane hydrocarbon, or from the group comprising: vegetable oils, esters of glycerin and a varying blend of fatty acids.

3. A method according to claim 1 or 2, wherein the step of exposing the sample to the clearing solvent comprises the step of immersing the sample in a processing tank comprising an amount of the clearing solvent.

4. A method according to claim 1 or 2, wherein the step of providing the clearing solvent comprises the step of providing supply means for supplying the clearing solvent to the embedded biological sample, said supply means comprising a source of clearing solvent, a supply nozzle and supply tubings for supplying the clearing solvent from the source to the sample via the tubings and nozzle.

5. A method according to claim 4, wherein the step of exposing said embedded biological sample to a clearing solvent comprising the step of rinsing said biological sample in a horizontal position with said clearing solvent.

6. A method according to claim 5, wherein said embedded sample is exposed to said clearing solvent under a continuous flow during a predetermined time period.

7. A method according to any of claim 1-6, wherein the step of removing said clearing solvent and liquefied embedding medium comprises the step of washing said biological sample with said washing solution, e.g. an aqueous buffer solution.

8. A method according to any of claim 1 - 6, wherein the step of removing the clearing solvent and the liquefied embedding medium comprises the step of supplying an air flow by means of an air blower.

9. A method according to any of claim 1 - 6, wherein the step of removing the clearing solvent and the liquefied embedding medium comprises the step of removing the fluids by means of centrifugal force.

10. A method according to any of claim 1 - 9, further comprising the step of performing said removal steps at room temperature or the step of increasing the processing temperature to perform said removal steps at a temperature of about 40 - 50 degrees C.

11. A method according to any of claim 1 - 10, further comprising the step of providing a vibration means configured to cause the sample and applied clearing solvent to vibrate during a processing step, whereby the processing time needed to accomplish a specific processing step may be reduced for a number of processing steps.

12. An apparatus for automated removal of an embedding medium from an embedded biological sample, comprising:
- an independently accessible clearing solvent holder;
- a plurality of independently accessible biological sample holders;
- at least one probe for dispensing clearing solvent;
- at least one fluid supply for supplying fluids to either the at least one probe or to at least one processing tank;
- at least one computer comprising a scheduler for scheduling tasks;
wherein an embedding medium may be removed from an embedded biological sample by:
- providing a clearing solvent, e.g. an organic solvent, capable of lowering the melting point of an embedding medium and/or dissolving an embedding medium; loading the plurality of sample holders with embedded biological samples;
- exposing the embedded biological sample to the clearing solvent, whereby the embedding medium is liquefied; and
- providing a washing solution capable of removing the clearing solvent and the liquefied embedded medium from said biological sample, said clearing solvent and said washing solution being immiscible.

13. An apparatus according to claim 12, wherein the clearing solvent is selected from the group comprising: hydrogenated naphthalene, naphthenic hydrocarbons, d-Limonenes, paraffinic/isoparaffinic hydrocarbons, paraffinic-glycol etheter, or alkane hydrocarbon, or from the group comprising: vegetable oils, esters of glycerin and a varying blend of fatty acids.

14. An apparatus according to claim 12 or 13, wherein the sample is exposed to the clearing solvent by immersing the sample in the processing tank comprising an amount of the clearing solvent.

15. An apparatus according to claim 12 or 13, further comprising a supply means that comprises a source of clearing solvent, a supply nozzle and supply tubings for supplying the clearing solvent from the source to the sample via the tubings and nozzle, and that is configured to expose the embedded biological sample to an amount of the clearing solvent by rinsing the biological sample in a horizontal position with said clearing solvent.

16. An apparatus according to claim 15, wherein the supply means provides a continuous flow of clearing solvent, whereby the embedded sample is exposed to said clearing solvent under a continuous flow during a predetermined time period.

17. An apparatus according to any of claim 12 - 16, wherein a washing solution supply means is configured to supply said washing solution, e.g. an aqueous buffer solution, whereby fluid on the biological sample is washed off.

18. An apparatus according to any of claim 12 - 16, further comprising an air blower configured to supply an air flow by means of which fluid on the biological sample can be removed.

19. An apparatus according to any of claim 12 - 16, further comprising a centrifuge configured to remove fluid from the biological sample by means of centrifugal force.

20. An apparatus according to any of claim 12 - 19, further comprising at least one temperature controller configured to control the temperature of the sample and/or fluids.

21. An apparatus according to any of claim 12 - 20, further comprising at least one distributed controller comprising a controller that communicates with at least one other controller that controls at least one element chosen from the at least one independently accessible reagent holder; at least one independently accessible biological sample holder; at least one probe; at least one reagent mixer; at least one fluid supply; and at least one temperature controller.

22. An apparatus according to any of claim 12 - 21, further comprising a vibration means configured to cause the sample and the applied clearing solvent to vibrate during a processing step, whereby the processing time needed to accomplish a specific processing step may be reduced for a number of processing steps.

23. An apparatus according to claim 22, wherein the vibration means is embedded in an element that is arranged to become in a supporting contact with a sample carrier.

24. An apparatus according to claim 22, wherein the vibration means is embedded in an element arranged to cover a sample on a sample carrier.

25. An apparatus according to any of claim 22 - 24, wherein the vibration means is a piezo electric element or a laser actuated element, configured to contact an edge of a sample carrier or a surface of the sample carrier to cause vibrations.

26. An apparatus according to any of claim 22 - 24, wherein the vibration means is configured to emit acoustic waves, e.g. surface acoustic waves ("SAW"), of a wave length adapted to at least one sample process that is assisted by the waves.

27. An apparatus according to claim 26, wherein the vibration means is configured to emit acoustic waves of a wave length smaller than or of approximately the same size as the sample carrier and more preferably, smaller than or of approximately the same size as the sample to be processed.

28. An apparatus according to any of claim 22 - 24, wherein the vibration means is a tapping robotic arm or an electric vibrator.

29. An apparatus according to any of claim 12-28, further comprising a camera designed to detect the presence of embedding medium.

30. An apparatus according to claim 29, wherein the camera is designed to detect the presence of paraffin traces using the change in the double refraction due to the presence or absence of paraffin.

31. An apparatus according to claim 29 or 30, further comprising a feed-back mechanism configured to determine the dewaxing efficiency.

32. A system for non-alcohol based removal of an embedding medium from an embedded biological sample within an automatic biological processing procedure, comprising an apparatus according to any of the claims 12-31, and means for executing any of the method steps according to the claims 1-11.

33. A computer-readable medium that stores instructions, which when executed by a processor control the steps in a method according to any of claim 1 - 11.

34. Use of a clearing solvent in a method for automated, non-alcohol based, removal of an embedding medium from an embedded biological sample according to any of the claims 1-11.
